# EUROPÄISCHE PATENTSCHRIFT

(11) **EP 2 546 547 B1**
(45) Veröffentlichungstag und Bekanntmachung des Hinweises auf die Patenterteilung: **12.10.2016**
(21) Anmeldenummer: 12181678.9
(22) Anmeldetag: 24.03.2007
(51) Int. Cl.: F16H 45/02, F16D 25/0638, F16D 25/12

(54) **Fluidbefüllte Kopplungsanordnung**
Coupling assembly filled with fluid
Accouplement rempli de liquide

(30) Priorität: 07.04.2006 DE 102006016417; 07.02.2007 DE 102007005999
(43) Veröffentlichungstag der Anmeldung: 16.01.2013
(62) Teilanmeldung aus: 07006109.8
(73) Patentinhaber: ZF Friedrichshafen AG, 88046 Friedrichshafen (DE)
(72) Erfinder: Heuler, Michael, 97078 Würzburg (DE); Dacho, Jürgen, 97688 Bad Kissingen (DE)

(56) Entgegenhaltungen:
- WO-A2-2007/079713
- DE-A1- 10 314 325

## Beschreibung

Die Erfindung betrifft eine fluidbefüllte Kopplungsanordnung gemäß dem Oberbegriff des Anspruches 1.

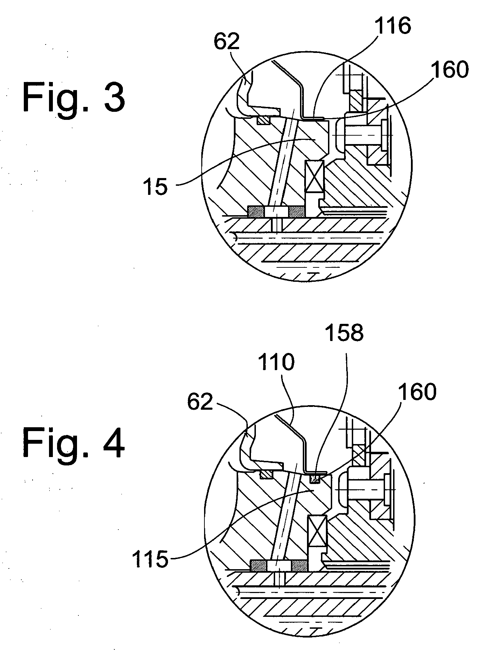

Aus der DE 103 14 325 A1 ist eine fluidbefüllte Kopplungsanordnung in Form eines hydrodynamischen Drehmomentwandlers bekannt, welche gemäß Fig. 3c in einem Gehäuse eine erste Kupplungseinrichtung aufweist, durch welche ein Pumpenrad eines hydrodynamischen Kreises mit dem Gehäuse verbind- oder lösbar ist, und eine zweite Kupplungseinrichtung aufweist, die als Überbrückungskupplung für einen hydrodynamischen Kreis dient, und somit befähigt ist, ein am Gehäuse anliegendes Drehmoment über einen Torsionsschwingungsdämpfer auf einen Abtrieb, wie beispielsweise eine Getriebeeingangswelle, zu übertragen, oder die Drehmomentübertragung auf diesem Weg zu beenden. Jede der beiden Kupplungseinrichtungen ist jeweils mit einem Kolben versehen, der in Abhängigkeit von seiner axialen Position im Gehäuse entweder eine Anpresskraft auf ein Kupplungselement einer axial benachbarten, über einen Reibbereich verfügenden Kupplung ausübt, und damit die Kupplung einrückt, oder aber die Anpresskraft auf das Kupplungselement aufhebt, und damit die Kupplung ausrückt.

Der Kolben der ersten Kupplungseinrichtung trennt einen ersten Druckraum axial zwischen dem Kolben und der Wandung des Gehäuses von einem zweiten Druckraum, der sich zwischen dem Kolben und einer Trennwandung erstreckt, wobei beide Druckräume über je eine Versorgungsleitung mit einer Versorgungsquelle zumindest verbindbar sind. Ebenso trennt der Kolben der zweiten Kupplungseinrichtung einen ersten Druckraum axial zwischen dem Kolben und der Wandung des Gehäuses von einem zweiten Druckraum, der sich zwischen dem Kolben und einer Trennwandung erstreckt, die dem Torsionsschwingungsdämpfer im Erstreckungsbereich eines Umfangsfedersatzes zugeordnet ist. Auch bei der zweiten Kupplungseinrichtung ist jedem Druckraum je eine Versorgungsleitung zugeordnet, wobei sich von diesen eine im Erstreckungsbereich des hydrodynamischen Kreises befindet. Beide Versorgungsleitungen sind mit einer Versorgungsquelle zumindest verbindbar.

Bei beiden Kupplungseinrichtungen der bekannten Kopplungsanordnung erfolgt durch die Trennwandung jeweils eine zumindest weitgehende Abdichtung des zweiten Druckraumes gegenüber dem hydrodynamischen Kreis. Des Weiteren wird versucht, durch die dem jeweiligen Kolben zugeordnete Trennwandung eine zwingend benötigte Durchströmung der kühlungsbedürftigen Kupplung mit Fluid zu fördern. Bei der ersten Kupplungseinrichtung wird dies durch eine auf die Kupplung zugerichtete Aussparung im Kolben bewirkt, welche eine Fluidströmung aus dem zweiten Druckraum in den Bereich der Kupplung ermöglicht. Bei der zweiten Kupplungseinrichtung wird Fluid zwangsweise über die Kupplung geleitet, ohne dass Fluid in Richtung des hydrodynamischen Kreises abströmen kann.

In Fig. 6 der DE 103 14 325 A1 ist eine einem Kolben zugeordnete Trennwandung dargestellt, die zumindest im Wesentlichen im Bereich ihres radial äußeren Endes über eine Drehsicherung verfügt, indem sie am Pumpenrad angebunden ist.

Auch durch die DE 103 47 782 A1 ist eine fluidbefüllte Kopplungsanordnung in Form eines hydrodynamischen Drehmomentwandlers bekannt, welche in einem Gehäuse eine Kupplungseinrichtung, realisiert als Überbrückungskupplung für einen hydrodynamischen Kreis, aufweist. Diese Kupplungseinrichtung ist mit einem Kolben versehen, der in Abhängigkeit von seiner axialen Position im Gehäuse entweder eine Anpresskraft auf ein Kupplungselement einer axial benachbarten, über einen Reibbereich verfügenden Kupplung ausübt, und damit die Kupplung zur Übertragung eines Drehmomentes ganz oder zumindest teilweise befähigt, oder aber die Ausübung der Anpresskraft auf das Kupplungselement zur Aufhebung der Übertragung des Drehmomentes beendet. Da ein antriebsseitiger Kupplungs-Elemententräger der Kupplung über das Gehäuse mit einem nicht gezeigten Antrieb und ein abtriebsseitiger Kupplungs-Elemententräger der Kupplung über einen Torsionsschwingungsdämpfer mit einem Abtrieb in Form einer Getriebeeingangswelle verbunden ist, dient die Kupplungseinrichtung zu einer An- oder Abkoppelung des Abtriebs gegenüber dem Antrieb.

Der Kolben ist sowohl an seinem radial äußeren Ende als auch an seinem radial inneren Ende gegenüber dem jeweils benachbarten Bauteil abgedichtet, und trennt somit einen zwischen einer Antriebsseite des Kolbens und einer benachbarten Gehäusewandung vorgesehenen antriebsseitigen Druckraum von einem an einer Abtriebsseite des Kolbens vorgesehenen abtriebsseitigen Druckraum, in welchem die Kupplung aufgenommen ist, und der somit auch als Kühlraum für die Kupplung dient, außerdem aber in unmittelbarer Strömungsverbindung mit dem hydrodynamischen Kreis steht. Der antriebsseitige Druckraum ist über eine erste Versorgungsleitung an eine Versorgungsquelle angeschlossen ist, der abtriebsseitige Druckraum über eine zweite Versorgungsleitung und der hydrodynamische Kreis über eine dritte Versorgungsleitung. In Fachkreisen wird eine derartige fluidbefüllte

Kopplungsanordnung als Drei-Leitungs-System bezeichnet.

Bei der bekannten fluidbefüllten Kopplungsanordnung wird versucht, durch antriebsseitige Kapselung des Torsionsschwingungsdämpfers die zwingend benötigte Durchströmung der kühlungsbedürftigen Kupplung bei einem Fluidaustausch zwischen hydrodynamischem Kreis und abtriebsseitigem Druckraum zu verbessern. Allerdings verbleiben hierbei eine Mehrzahl von als berührungsfreie Dichtstellen wirksame Spalten, die aus Toleranzgründen ein bestimmtes Mindestspaltmaß nicht unterschreiten dürfen, und dadurch dem fluidförmigen Medium immer noch hinreichend Möglichkeiten für eine unerwünschte Leckageströmung eröffnen. Würden statt der vorgenannten Spalte Berührungsdichtungen verwendet, so wären diese zum einen gerade an Stellen relativer Bewegung, wie beispielsweise in Zuordnung zum abtriebsseitigen Druckraum, reibungsbedingt einem erhöhten Verschleiß unterworfen, der wiederum eine Vergrößerung der Leckageströmung zur Folge hätte, und zum anderen könnte die Entkopplungsgüte des Torsionsschwingungsdämpfers, ebenfalls reibungsbedingt, nachhaltig beeinträchtigt sein. Zudem ist nicht auszuschließen, dass durch unerwünschte Leckageströme gerade im abtriebsseitigen Druckraum die Betätigungsgeschwindigkeit des Kolbens ebenso beeinträchtigt ist wie dessen Regelungsqualität.

Die zuvor geschilderten Nachteile gelten in analoger Weise auch bei fluidbefüllten Kopplungsanordnungen in Form nasslaufender Kupplungssysteme, die ohne einen zur Momentenübertragung befähigten hydrodynamischen Kreis auskommen müssen, bei denen aber gleichwohl die Kupplungselemente der Kupplung in einem Kühlraum angeordnet sind, der durch den Kolben von einem antriebsseitigen Druckraum getrennt ist. Auch hier ist der Druckraum an eine erste Versorgungsleitung angeschlossen, und der Kühlraum an zumindest eine weitere Versorgungsleitung. Beispielhaft für derartige Kopplungsanordnungen sei auf die DE 102 34 822 A1 verwiesen.

Der Erfindung liegt die Aufgabe zugrunde, eine fluidbefüllte Kopplungsanordnung mit einer einen Kolben aufweisenden Kupplungseinrichtung derart auszubilden, dass kühlungsverschlechternde Leckageströme fluidförmigen Mediums zumindest reduziert sind, während ein nennenswerter Dichtungsverschleiß ebenso wie entkopplungsverschlechternde Reibeinflüsse wirksam vermieden sind.

Diese Aufgabe wird durch die Merkmale des Anspruchs 1 gelöst. Hierbei ist einem Kolben einer Kupplungseinrichtung einer fluidbefüllten Kopplungsanordnung abtriebsseitig eine Trennwandung zugeordnet, so dass ein abtriebsseitiger Druckraum zumindest im Wesentlichen einerseits durch eine Abtriebsseite des Kolbens und andererseits durch die Trennwandung begrenzt ist, die ihrerseits zwischen der Abtriebsseite des abtriebsseitigen Druckraumes und einem Kühlraum wirksam ist, wobei der letztgenannte bei Ausbildung der fluidbefüllten Kopplungsvorrichtung als hydrodynamischer Drehmomentwandler im Sinne eines hydrodynamischen Kreises wirksam ist. Dadurch bedingt, ergibt sich im radialen Erstreckungsbereich des abtriebsseitigen Druckraumes eine Strömungsführung, die frei von leckagebedingenden Unterbrechungen, wie Spalten, ist, und daher die Ausbildung einer zumindest im wesentlichen ungeminderten Fluidströmung bewirkt zwischen einer dem abtriebsseitigen Druckraum zugeordneten Versorgungsleitung, die an einer Versorgungsquelle angeschlossen ist, und einer mit dem Kolben zusammenwirkenden, einen Reibbereich aufweisenden Kupplung der Kupplungseinrichtung, und zwar sowohl bei Strömungsrichtung der Fluidströmung von der Versorgungsleitung zum Reibbereich, als auch in entgegengesetzter Strömungsrichtung. Bei einer fluidbefüllten Kopplungsanordnung in Form eines Drei-Leitungs-Systems ist hierbei der abtriebsseitige Druckraum unmittelbar mit der diesem Druckraum zugeordneten Versorgungsleitung verbunden, während bei einer fluidbefüllten Kopplungsanordnung in Form eines Zwei-Leitungs-Systems der abtriebsseitige Druckraum über zumindest eine Verbindung zu einem antriebsseitigen Druckraum mit einer dem letztgenannten Druckraum zugeordneten Versorgungsleitung verbunden werden kann. Zur besseren Unterscheidbarkeit der beiden Versorgungsleitungen soll die dem antriebsseitigen Druckraum zugeordnete als erste Versorgungsleitung und die dem abtriebsseitigen Druckraum zugeordnete Versorgungsleitung als zweite Versorgungsleitung bezeichnet werden.

Bedingt durch die vorgenannte Ausgestaltung des abtriebsseitigen Druckraums kann fluidförmiges Medium, das diesen Druckraum durchströmt, nur über einen Strömungsdurchlass, der den abtriebsseitigen Druckraum mit dem Kühlraum verbindet, den Druckraum an dessen von der jeweiligen Versorgungsleitung abgewandten Seite wieder verlassen, wodurch sich eine Zwangsströmung über eine Kupplung der Kupplungseinrichtung und damit über deren Reibbereich ergibt. Dieser Vorteil tritt sowohl bei einem Drei-Leitungs-Wandler als auch bei einem Zwei-Leitungs-Wandler auf, wobei sich bei dem letztgenannten aufgrund der dem Kolben zugeordneten Trennwandung zudem der Vorteil einer besseren Schubeinregelfähigkeit, also des geregelten Schließens des Kolbens bei Schubbetrieb zur Nutzung der Motorbremse, einstellt.

Aufgrund der Trennwandung ist die abtriebsseitige Druckkammer nicht nur mit Ausnahme der Versorgungsleitung sowie des Strömungsdurchlasses geschlossen, sondern darüber hinaus auch kompakt, was eine rasche Befüllbarkeit dieser Druckkammer mit Fluid für einen schnellen Druckaufbau an der Abtriebsseite des Kolbens ebenso wie eine gezielte Befüllbarkeit der Druckkammer für eine feinfühlige Regelung einer Bewegung des Kolbens begünstigt.

Die Trennwandung ist in Bezug zum Kolben axial relativ bewegbar, wodurch sich der Vorteil ergibt, dass die Trennwandung ungeachtet des jeweiligen Betriebszustandes der Kupplungseinrichtung, also sowohl offen als auch geschlossen oder zumindest teilweise geschlossen, bei entsprechender Festlegung der Durchflussrichtung in der fluidbefüllten Kopplungsanordnung, jeweils am benachbarten Kupplungselement pressend in Anlage verbleibt. Auf diese Weise wird das Entstehen einer Restleckage vermieden, die sich bei einem Ablösen der Trennwandung vom benachbarten Kupplungselement ergeben könnte.

Ebenso kann aber auch eine Festverbindung der Trennwandung mit dem Kolben vorteilhaft sein. Die Trennwandung, die, wie nachfolgend ausführlich ausgeführt wird, mittels einer Drehsicherung in das Gehäuse der fluidbefüllten Kopplungsanordnung eingesetzt werden kann, bewirkt durch ihre Festverbindung mit dem Kolben eine drehfeste Aufnahme auch desselben, so dass der Kolben gegen eine ungewollte Relativdrehung gegenüber dem Gehäuse und damit gegenüber eventuellen Kolbendichtungen gesichert ist, was eine Reduzierung des Dichtungsverschleißes begünstigt.

Der durch die Festverbindung erzielbare Vorteil einer Drehsicherung des Kolbens gegenüber dem Gehäuse durch die Trennwandung stellt sich auch durch eine Axialgleitführung zwischen Kolben und Trennwandung ein, die eine Relativdrehung zwischen Kolben und Trennwandung zwar unterbindet, eine axiale Relativbewegung von Kolben und Trennwandung aber zulässt. Eine derartige Axialgleitführung ist mit Vorzug im radial mittleren Bereich von Kolben und Trennwandung vorgesehen, und verfügt über Zapfen oder Kassetten, die in zugeordnete Öffnungen oder Kassettenhalterungen eingreifen.

Durch die bereits erwähnte Drehsicherung der Trennwandung gegenüber dem Antrieb wird eine drehfeste Verbindung zu demselben herstellt. Auf diese Weise wird für Drehzahlgleichheit zwischen der Trennwandung und dem benachbarten Kupplungselement der Kupplung gesorgt, was sich verschleißmindernd auswirkt. Hierbei besteht auch die Möglichkeit, auf das dem Kolben der Kupplungseinrichtung am nächsten liegende Kupplungselement völlig zu verzichten, wenn die Trennwandung im Bereich ihres radial äußeren Endes mit einem Radialansatz versehen ist, der funktional als Ersatz-Kupplungselement wirksam ist. Bei diesem Ersatz-Kupplungselement kann ebenso wie an einer ohne Radialansatz ausgebildeten Trennwandung die Drehsicherung durch eine Verzahnung, insbesondere im Bereich des radial äußeren Endes der Trennwandung, gebildet sein, wobei diese Verzahnung mit einer weiteren Verzahnung in Eingriff steht, die zur Mitnahme des mit dem Antrieb drehfesten Kupplungselementes der Kupplung dient. Alternativ hierzu kann die Trennwandung aber auch formschlüssig mit einem drehfest am Gehäusedeckel aufgenommenen Kupplungselement in Mitnahmeverbindung stehen.

Eine vorteilhafte Ausführung der Trennwandung entsteht, wenn diese axial elastisch ausgebildet ist, z.B. als Axialfeder wirksam ist, die auf den Kolben der Überbrückungskupplung eine Axialkraft ausübt, diesen also federnd in Richtung des Gehäusedeckels drückt, so dass die Herstellung einer unbeabsichtigten, insbesondere einer unkontrollierten Wirkverbindung zwischen Antriebs- und Abtriebsseite der Kopplungsanordnung ausgeschlossen ist. Ein unkontrolliertes Herstellen der Wirkverbindung kann insbesondere nach einem Motorstart bei bereits im wesentlichen befülltem antriebsseitigem Druckraum, aber lediglich teilbefülltem hydrodynamischem Kreis, auftreten, wenn das Fluid fliehkraftbedingt nach radial außen gedrängt wird, und hierbei dem im Druckraum enthaltenen Fluid im wesentlichen nur im hydrodynamischen Kreis enthaltene Luft entgegen wirkt. Bei diesem Betriebszustand kann der hydrodynamische Kreis somit keinen Gegendruck zum Druck im Druckraum aufbauen.

Beispielsweise kann vorgesehen sein, dass die Trennwandung bei Ausführung als Axialfeder eine zum Gehäusedeckel gerichtete Axialkraft erzeugt.

Ferner kann bei dem erfindungsgemäßen Aufbau die Trennwandung bei Ausführung als Axialfeder unter axialer Vorspannung stehen.

Bei einer vorteilhaften Weiterbildung der erfindungsgemäßen Kupplungsanordnung ist die Trennwandung bei Ausführung als Axialfeder zumindest bei aufgehobener Wirkverbindung zwischen dem Antrieb und dem Abtrieb unter Einhaltung eines vorbestimmten Axialspaltes gegenüber dem Kolben angeordnet, während die Trennwandung im Verlauf der Herstellung der Wirkverbindung zwischen dem Antrieb und dem Abtrieb unter elastischer Verformung gegen die Wirkung einer Federkraft eine zunehmende Annäherung an den Kolben bis zur Inanlagebringung an demselben erfährt.

Bei Ausbildung eines Axialspaltes zwischen der als Axialfeder ausgebildeten Trennwandung und dem Kolben der Überbrückungskupplung wirkt die Trennwandung als Anlegefederung für den Kolben, und erlaubt somit eine sanfte Herstellung einer Wirkverbindung zwischen Antriebs- und Abtriebsseite der Kopplungsvorrichtung ohne sprunghaften Momentenanstieg. Die Trennwandung arbeitet bei dieser Ausführung unter Belastung wie eine Tellerfeder, indem sich derjenige Bereich elastisch verformt, der sich zwischen einer axialen Abstützung am Kolben und dem Druckbereich des Kolbens, vorzugsweise gebildet durch eine an demselben vorgesehene Profilierung, erstreckt. Wenn der Axialspalt nach zunehmender elastischer Durchbiegung der Trennwandung aufgebraucht ist, wirkt der Kolben wieder, wie bei der zuvor erläuterten Ausführung, ohne Anlegefederung für den Kolben, mit der Kupplung zusammen.

Mit Vorzug verfügt die Trennwandung über wenigstens eine integrierte Zone, die in zumindest einem vorbestimmten Radialbereich relativ zur Drehachse der Kupplung vorgesehen ist. Diese Zone kann bei einem mit einer Profilierung am Druckbereich versehenen Kolben ebenflächig sein, kann aber ebenso, unter Bildung von Strömungskanälen für radial durchströmendes Fluid, mit einer Profilierung ausgebildet sein. Im letztgenannten Fall kann der Druckbereich des Kolbens ebenflächig sein. Die vorgenannte Profilierung kann entweder als Wellprofilierung oder als unterbrechungsbehaftete Profilierung ausgebildet sein. Im erstgenannten Fall ändert sich in Umfangsrichtung alternierend der Axialabstand der Trennwandung zum Kolben, während im letztgenannten Fall Zungen an der Trennwandung vorgesehen sind, die sich nach radial außen erstrecken, wobei in Umfangsrichtung zwischen jeweils zwei Zungen jeweils eine Umfangsunterbrechung vorgesehen ist.

Die Profilierung kann sowohl an einer axial steifen Tennwandung als auch an einer als Axialfeder ausgebildeten Trennwandung vorgesehen sein.

Die Trennwandung leitet zwischen sich und dem Kolben der Überbrückungskupplung fluidförmiges nach radial außen in den Erstreckungsbereich der Kupplung. Dort sind anspruchsgemäß zwischen Zahnkopfbereichen einer Innenverzahnung an einem Axialabschnitt eines Gehäuses und Zahnfußbereichen einer Außenverzahnung von radial äußeren Kupplungselementen sowie eines zur Axialabstützung dienenden End-Kupplungselementes vorgesehene Strömungspassagen für das fluidförmige Medium vorhanden, um dieses zu den einzelnen Kupplungselementen zu leiten. Um zu vermeiden, dass das fluidförmige Medium unter Umgehung der Kupplungselemente auf direktem Weg von der Trennplatte über die Strömungspassagen in den hydrodynamischen Kreis übertreten kann, ist vorgesehen, einen das bereits erwähnte End-Kupplungselement axial positionierenden Stützring als Fluiddichtung zu verwenden. Mit Vorzug ist dieser Stützring daher axial zwischen den Strömungspassagen und dem hydrodynamischen Kreis angeordnet.

Die vorliegende Erfindung wird nachfolgend mit Bezug auf die beiliegenden Zeichnungen anhand bevorzugter Ausgestaltungsformen detailliert beschrieben. Es zeigen:
- Fig. 1: ein Prinzip-Schaltbild eines Antriebsstranges mit einem Antrieb, einer fluidbefüllten Kopplungsanordnung und einer Getriebeanordnung;
- Fig. 2: eine Längsschnittansicht der Kopplungsanordnung, mit einer einen Kolben, eine Trennwandung und eine Kupplung aufweisenden Kupplungseinrichtung, und mit Ausbildung mit drei Versorgungsleitungen;
- Fig. 3: eine Einzelheit von Kolben und Trennwandung mit Anordnung von Kolben und Trennwandung auf einer antriebsseitigen Gehäusenabe, und mit einer der Trennwandung zugeordneten Abdichtung in Form einer Spaltdichtung;
- Fig. 4: wie Fig. 3, aber mit einer Abdichtung in Form einer Berührungsdichtung;

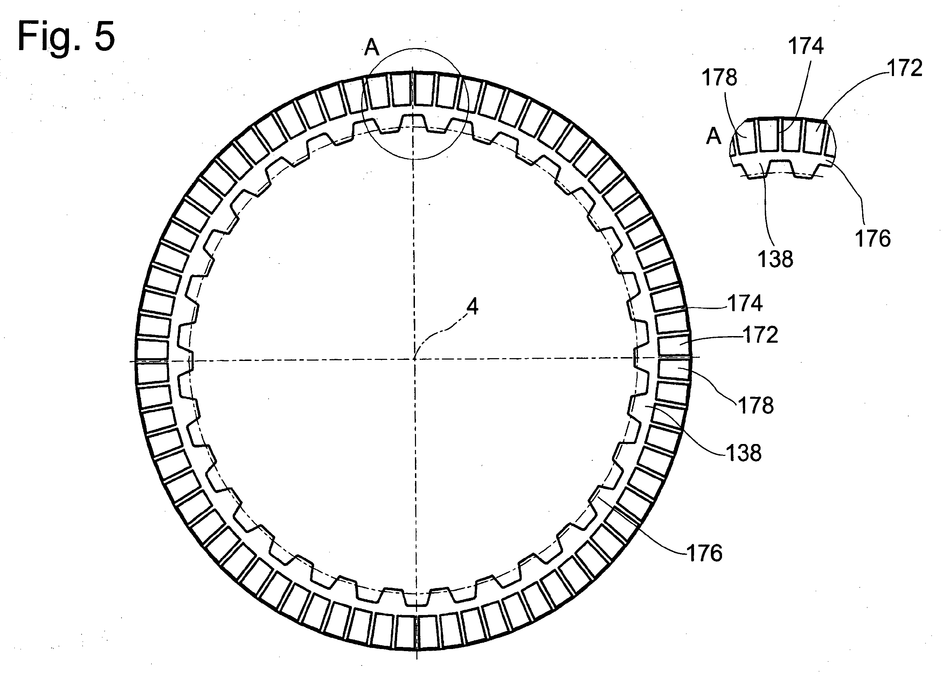

- Fig. 5: eine Draufsicht auf ein Kupplungselement der Kupplung;
- Fig. 6: eine Draufsicht auf die Trennwandung;
- Fig. 7: eine Einzelheit mit Drehsicherung der Trennwandung an einem Kupplungselement der Kupplung;
- Fig. 8: eine Kolbendrehsicherung durch Anordnung des Kolbens auf einer Axialgleitführung der Trennwandung;
- Fig. 9: eine Draufsicht auf die Trennwandung zur Darstellung einer anderen Axialgleitführung;
- Fig. 10: eine Ausbildung der Trennwandung als Kupplungselement der Kupplung;
- Fig. 11: eine Zentrierung des Kolbens auf der antriebsseitigen Gehäusenabe und der Trennwandung auf der Torsionsdämpfernabe, sowie eine Anordnung einer Lagerung zwischen der Gehäusenabe und der Torsionsdämpfernabe,
- Fig. 12: wie Fig. 2, aber mit Ausbildung der Kopplungsanordnung mit zwei Versorgungsleitungen,
- Fig. 13: wie Fig. 2, aber mit Ausbildung der Trennwandung als unmittelbar am Kolben anliegende Axialfeder,
- Fig. 14: wie Fig. 13, aber mit einem Axialspalt zwischen Trennwandung und Kolben bei aufgehobener Wirkverbindung zwischen dem Antrieb und einem Abtrieb,
- Fig. 15: eine vergrößerte Herauszeichnung eines Bereichs aus Fig. 14,
- Fig. 16: eine Darstellung der Trennwandung mit einer Wellprofilierung,
- Fig. 17: wie Fig. 16, aber mit einer unterbrechungsbehafteten Profilierung der Trennwandung,
- Fig. 18: eine Darstellung einer in Fig. 2 gezeigten Verzahnung in Blickrichtung auf den Kolben zu, vorgenommen zwischen zwei radial äußeren Kupplungselementen,
- Fig. 19: wie Fig. 18, aber vorgenommen an der von den radial äußeren Kupplungslamellen abgewandten Seite eines ein End-Kupplungselement gegenüber einer Verzahnung im Gehäuse positionierenden Stützringes, und
- Fig. 20: wie Fig. 17, aber mit zusätzlicher Darstellung einer Drehsicherung.

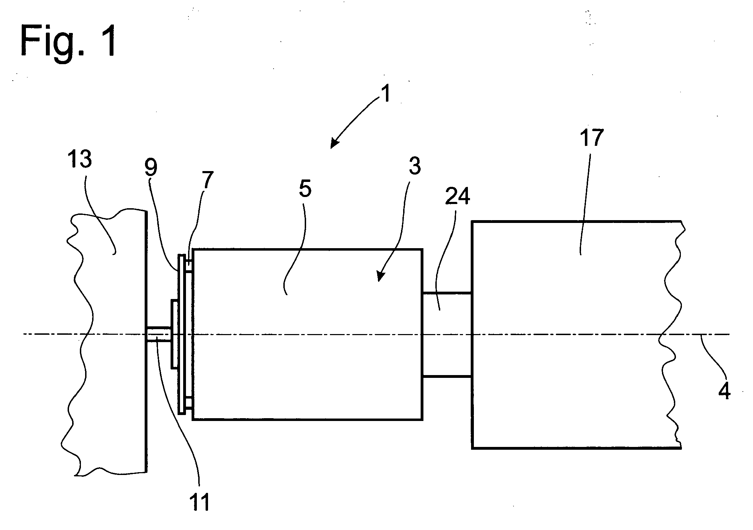

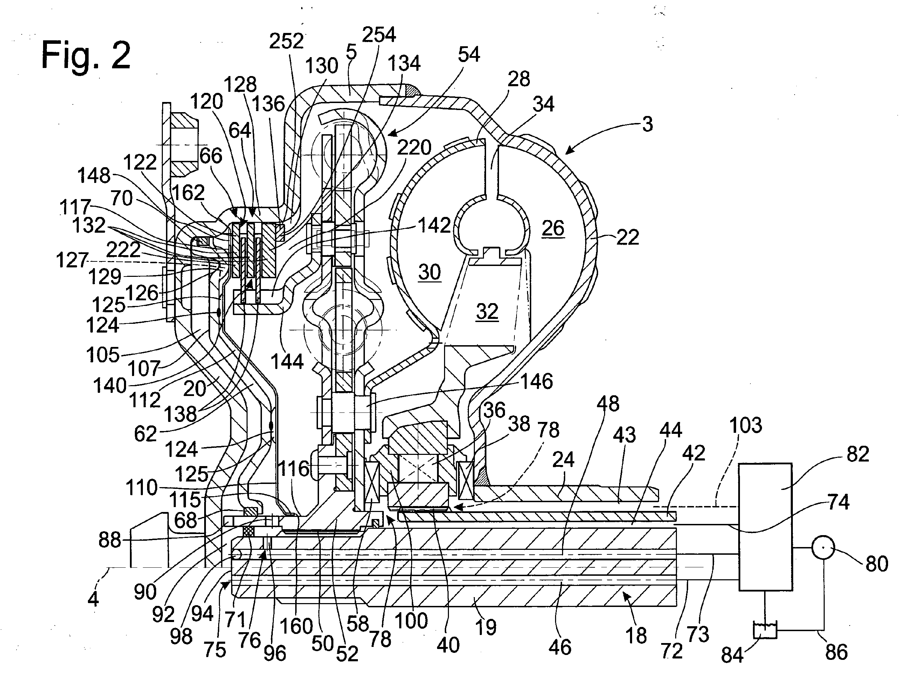

In Fig. 1 ist ein Antriebsstrang 1 mit einer erfindungsgemäßen fluidbefüllten Kopplungsanordnung 3 schematisch dargestellt, wobei die Kopplungsanordnung 3 sowohl durch einen hydrodynamischen Drehmomentwandler gebildet sein kann, als auch durch ein nasslaufendes Kupplungssystem, wie es beispielsweise aus der eingangs bereits genannten DE 102 34 822 A1 bekannt ist. Die Kopplungsanordnung 3, die um eine Drehachse 4 Rotationsbewegungen auszuführen vermag, umfasst ein Gehäuse 5, das über eine Mehrzahl von Befestigungsorganen 7 und ein Kopplungselement 9, wie z.B. eine Flexplatte, mit einem Antrieb 11, beispielsweise der Kurbelwelle einer Brennkraftmaschine 13, zur gemeinsamen Drehung gekoppelt werden kann. An der vom Antrieb 11 entfernt liegenden Axialseite weist das Gehäuse 5 eine abtriebsseitige Gehäusenabe 24 auf, die beispielsweise in eine Getriebeanordnung 17 eingreift und dort eine nicht gezeigte Fluidförderpumpe zur Drehung antreibt. Zur abtriebsseitigen Gehäusenabe 24 konzentrisch angeordnet ist ein in Fig. 2 gezeigter Abtrieb 18, der, beispielsweise als Getriebeeingangswelle 19 ausgebildet, mit seinem freien Ende in das Gehäuse 5 ragt.

In Fig. 2 ist die fluidbefüllte Kopplungsanordnung 3 in Form eines hydrodynamischen Drehmomentwandlers dargestellt. Das Gehäuse 5 weist an seiner dem Antrieb 11 zugewandten Seite einen Gehäusedeckel 20 auf, der fest mit einer Pumpenradschale 22 verbunden ist. Diese geht im radial inneren Bereich in eine Pumpenradnabe 24 über.

Die Pumpenradschale 22 bildet zusammen mit Pumpenradschaufeln ein Pumpenrad 26, das mit einem eine Turbinenradschale 28 mit Turbinenradschaufeln aufweisenden Turbinenrad 30 sowie mit einem über Leitradschaufeln verfügenden Leitrad 32 zusammenwirkt. Pumpenrad 26, Turbinenrad 30 und Leitrad 32 bilden in bekannter Weise einen hydrodynamischen Kreis 34.

Das Leitrad 32 ist auf einem Freilauf 36 angeordnet, der sich über eine für fluidförmiges Medium durchlässige Axiallagerung 38 an der Pumpenradnabe 11 axial abstützt, und steht drehfest, aber axial relativ verschiebbar, über eine Verzahnung 40 mit einer Stützwelle 42 in Verbindung, die, unter Bildung eines Kanals 43 gemeinsam mit der abtriebsseitigen Gehäusenabe 24, radial innerhalb derselben angeordnet ist. Die Stützwelle 42, als Hohlwelle ausgebildet, umschließt ihrerseits, unter Ausbildung eines im wesentlichen ringförmigen Kanals 44, die als Abtrieb 18 dienende Getriebeeingangswelle 19, die über zwei mit Radialversatz zueinander angeordnete Axialdurchgänge 46, 48 für fluidförmiges Medium verfügt, von denen am antriebsseitigen Ende 94 der Getriebeeingangswelle 19 der erste Axialdurchgang 46 in einer Umlenkkammer 92 mündet, während der zweite Axialdurchgang 48 kurz vor Erreichen des antriebsseitigen Endes 94 der Getriebeeingangswelle 19 durch einen Verschluss 98 endet, um sich über eine Radialverbindung 96 nach radial außen zu öffnen.

Die Axialdurchgänge 46, 48 sind, ebenso wie der Kanal 44 und/oder der Kanal 43, jeweils über Strömungsleitungen 72 bis 74 und/oder 103 an einen Fluidverteiler 82 angeschlossen, der zur Aufnahme fluidförmigen Mediums mit einer Versorgungsquelle 80 und zur Abgabe fluidförmigen Mediums mit einem Vorratsbehälter 84 verbunden sein kann. Der letztgenannte kann über eine Verbindungsleitung 86 an die Versorgungsquelle 80 angeschlossen sein kann.

Die Getriebeeingangswelle 19 nimmt über eine Verzahnung 50 eine Torsionsdämpfernabe 52 eines Torsionsschwingungsdämpfers 54 drehfest, aber axial verschiebbar auf. Die Torsionsdämpfernabe 52 stützt sich einerseits über eine Axiallagerung 58 am bereits genannten Freilauf 36 ab, und kann andererseits am Gehäusedeckel 20 in Anlage gelangen. Des weiteren trägt die Torsionsdämpfernabe 52 einen Kolben 62 einer als Überbrückungskupplung 64 ausgebildeten Kupplungseinrichtung 66. Der Kolben 62 ist über eine radial innere Kolbendichtung 68 gegenüber der Torsionsdämpfernabe 52 und über eine radial äußere Kolbendichtung 70 gegenüber dem Gehäusedeckel 20 abgedichtet.

An der radialen Innenseite der Torsionsdämpfernabe 52 ist eine Dichtung 71 vorgesehen, die sich anderenends an der Getriebeeingangswelle 19 abstützt, und zwischen in der Torsionsdämpfernabe 52 vorgesehenen Radialdurchgängen 88, 90 wirksam ist. Der antriebsseitige Radialdurchgang 88 bildet gemeinsam mit der Umlenkkammer 92, dem ersten Axialdurchgang 46 und der ersten Strömungsleitung 72 eine erste Versorgungsleitung 75 für fluidförmiges Medium, der abtriebsseitige Radialdurchgang 90 dagegen zusammen mit der Radialverbindung 96, dem zweiten Axialdurchgang 48 und der zweiten Strömungsleitung 73 eine zweite Versorgungsleitung 76. Schließlich bildet ein Strömungsdurchgang 100 axial zwischen der Axiallagerung 58 und dem Freilauf 36 zusammen mit dem Kanal 44 und der Strömungsleitung 74 und/oder ein Strömungsdurchgang 102 axial zwischen dem Freilauf 36 und der Axiallagerung 38 zusammen mit dem Kanal 43 und der Strömungsleitung 103 eine dritte Versorgungsleitung 78.

Vom Fluidverteiler 82 über die erste Versorgungsleitung 75 eingeleitetes fluidförmiges Medium gelangt in einen zwischen dem Gehäusedeckel 20 und dem Kolben 62 vorgesehenen antriebsseitigen Druckraum 105, der im Fall eines Überdruckes eine Antriebsseite 107 des Kolbens 62 belastet. Vom Fluidverteiler 82 über die zweite Versorgungsleitung 76 eingeleitetes fluidförmiges Medium gelangt dagegen in einen zwischen dem Kolben 62 und einer axial relativ zu demselben bewegbaren Trennwandung 110 vorgesehenen abtriebsseitigen Druckraum 112, der im Fall eines Überdruckes eine Abtriebsseite 114 des Kolbens 62 belastet.

Die Trennwandung 110 kann axial elastisch ausgebildet sein. Sie ist mit ihrem radial inneren Ende 115 über eine Abdichtung 160 an der Torsionsdämpfernabe 52 zentriert, wobei diese Abdichtung 115 als Spaltdichtung 116 ausgeführt ist. Das radial äußere Ende 117 der Trennwandung 110 dient als eine Drehsicherung 162 und dringt axial in einen Bereich zwischen dem Kolben 62 und einem Anfangs-Kupplungselement 122 einer Kupplung 120 ein. Zugunsten eines problemlosen Strömungsdurchganges für das fluidförmige Medium ist die Trennwandung 110 an ihrer dem Kolben 62 zugewandten Seite mit Distanzhaltern 124 versehen, zwischen denen sich in Umfangsrichtung erste Strömungskanäle 125 ausbilden, die in Achsrichtung zwischen dem Kolben 62 und der Trennwandung 110 verlaufen. Alternativ oder zusätzlich kann der Kolben 62 mit einer Profilierung 126 ausgebildet sein, so dass auf diese Weise in den Kolben 62 integrierte Strömungskanäle 127 entstehen. Hierdurch entsteht im Kolben 62 ein Druckbereich 129.

An der Innenseite eines Axialabschnittes 128 des Gehäusedeckels 20 ist eine Verzahnung 130 für radial äußere Kupplungselemente 132, nachfolgend kurz als Außen-Kupplungselemente bezeichnet, vorgesehen, zu der das bereits erwähnte Anfangs-Kupplungselement 122 ebenso wie ein mit größerem Querschnitt ausgebildetes und daher steiferes End-Kupplungselement 134 gehören, wobei das letztgenannte über einen Stützring 136 axial am Gehäusedeckel 20 abgestützt ist. Aufgrund der Verzahnung 130 sind die Außen-Kupplungselemente 132 drehfest an das Gehäuse 5 und damit an den Antrieb 11 angebunden.

Die Außen-Kupplungselemente 132 sind unter Druckeinwirkung durch den Kolben 62 mit radial inneren Kupplungselementen 138, nachfolgend kurz als Innen-Kupplungselemente bezeichnet, in Wirkverbindung versetzbar, wobei zwischen Reibbelägen und Reibflächen der Kupplungselemente 132, 138 ein zur Übertragung von Drehmomenten dienender Reibbereich 140 einer Kupplung 120 entsteht. Die Innen-Kupplungselemente 138 stehen über eine Verzahnung 142 eines Trägers 144 mit einem Eingangsteil 146 des Torsionsschwingungsdämpfers 54 in drehfester Verbindung, durch welchen die Drehmomente über die Verzahnung 50 auf die Getriebeeingangswelle 19 übertragbar sind. Somit sind die Innen-Kupplungselemente 138 über den Torsionsschwingungsdämpfer 54 mit dem Abtrieb 11 verbunden. Bei voneinander getrennten Kupplungselementen 132, 138 werden vom Gehäuse 5 eingeleitete Drehmomente dagegen über den hydrodynamischen Kreis 34 auf das Turbinenrad 30 und von diesem mittels einer Anbindung 146 an den Torsionsschwingungsdämpfer 54 übertragen, von dem aus die Drehmomente wiederum an die Getriebeeingangswelle 19 und damit den Abtrieb 11 weitergeleitet werden. Bei Verzicht auf einen Torsionsschwingungsdämpfer 54 können bei beiden Betriebsarten die Innen-Kupplungselemente 138 unmittelbar an den Abtrieb 11 angebunden sein.

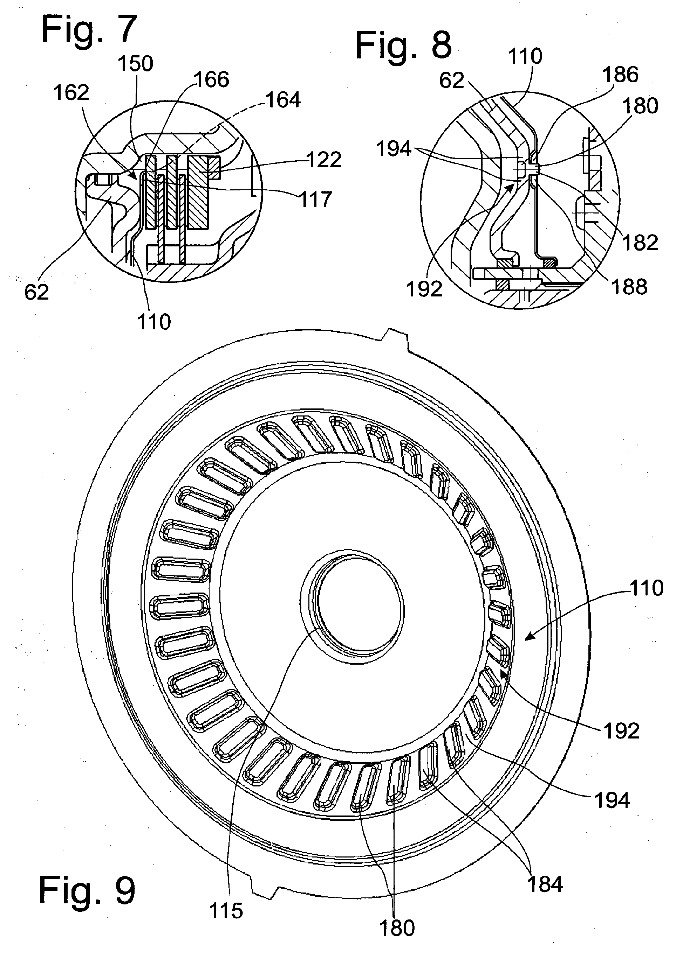

Zur Trennwandung 110 bleibt nachzutragen, dass diese aufgrund des Eingriffs von deren radial äußerem Ende 117 axial zwischen den Kolben 62 und das Anfangs-Kupplungselement 122 bei der Übertragung einer Axialkraft vom Kolben 62 auf den Reibbereich 140 der Kupplung 120 beteiligt ist. Mit Vorzug kann hierbei die Trennwandung 110 axial elastisch ausgebildet sein, insbesondere in Form eines membranartigen Elementes. Zudem kann die Trennwandung 110 über eine Verzahnung 148 an ihrem radial äußeren Ende 117 drehfest an die Verzahnung 130 des Außen-Kupplungselementes 132 angebunden sein. Eine deutliche Darstellung der Verzahnung 148 ist aus Fig. 7 erkennbar.

Zum Schließen der Überbrückungskupplung 64 und damit zum Einrücken wird über die erste Versorgungsleitung 75 der antriebsseitige Druckraum 105 mit einem Überdruck gegenüber dem abtriebsseitigen Druckraum 112 beaufschlagt, und dadurch der Kolben 62 zusammen mit der Trennwandung 110 in Richtung zur Kupplung 120 zur Beaufschlagung der Kupplungselemente 132, 138 mit einer Axialkraft verlagert, so dass die Trennwandung 110 bei diesem Betriebszustand durch den Kolben 62 gegen das Anfangs-Kupplungselement 122 gepresst ist. Gleichzeitig wird der abtriebsseitige Druckraum 112 zur Kühlung des Reibbereiches 140 der Kupplung 120 über die zweite Versorgungsleitung 76 mit fluidförmigem Medium versorgt, wobei das aus der zweiten Versorgungsleitung 76 nachströmende Medium dank der Distanzhalter 124 und/oder der Profilierung 126 über die Strömungskanäle 125, 127 im Druckraum 112 nach radial außen gefördert werden kann, um hier über die Verzahnung 148 der Trennwandung 110 unmittelbar in die Verzahnung 130 der Außen-Kupplungselemente 132 abzuströmen. Die Verzahnung 148 ist demnach als alleiniger Strömungsdurchlass 150 für das fluidförmige Medium zwischen abtriebsseitigem Druckraum 112 und einem Kühlraum 220, in welchem die Kupplung 120 angeordnet ist, wirksam, so dass bei jedem Übertritt fluidförmigen Mediums zwischen diesen beiden Räumen 112, 220 der fluidbefüllten Kopplungsanordnung 3 eine Zwangsdurchströmung der Kupplung 120 herbeigeführt wird. Bei Ausbildung der fluidbefüllten Kopplungsanordnung 3 als hydrodynamischer Drehmomentwandler ist der Kühlraum 220 gleichzeitig als hydrodynamischer Kreis 34 wirksam.

Das fluidförmige Medium wird nach Eintritt in die Verzahnung 130 der Außen-Kupplungselemente 132 innerhalb des Verzahnungsbereiches axial weitergeleitet, maximal allerdings nur bis in den axialen Erstreckungsbereich des End-Kupplungselementes 134 und/oder des Stützringes 136, sofern an zumindest einem dieser Bauteile und/oder im Bereich der Verzahnung 130 entsprechende Dichtungsmaßnahmen getroffen sind. Auf diese Weise verbleibt dem fluidförmigen Medium allein die Möglichkeit, entlang des Reibbereiches 140 der Kupplung 120 zwischen den Kupplungselementen 132 und 138 nach radial innen in den Kühlraum 220 abzuströmen, und dabei den Reibbereich 140 sehr effizient zu kühlen.

Das fluidförmige Medium gelangt vom Kühlraum 220 über den Strömungsdurchgang 100 und/oder 102 und damit über die dritte Versorgungsleitung 78 zum Fluidverteiler 82.

Zum Öffnen der Überbrückungskupplung 64 und damit zum Ausrücken wird die zweite Versorgungsleitung 76 und damit der abtriebsseitige Druckraum 112 mit einem Überdruck gegenüber dem antriebsseitigen Druckraum 105 beaufschlagt, und dadurch der Kolben 62 in Richtung zum Gehäusedeckel 20 zur Aufhebung der auf die Kupplungselemente 132, 138 übertragenen Axialkraft verlagert. Hierbei bewirkt die Versorgung des abtriebsseitigen Druckraumes 112 mit fluidförmigem Medium aus der zweiten Versorgungsleitung 76, dass die Trennwandung 110 axial an dem Anfangs-Kupplungselement 122 in Anlage verbleibt, während der Kolben 62 seine Verlagerungsbewegung in Richtung zum Gehäusedeckel 20 vollzieht. Auch bei diesem Betriebszustand bleibt demnach die Bedingung erhalten, wonach das fluidförmige Medium ausschließlich über die Verzahnung 148 der Trennwandung 110 aus dem abtriebsseitigen Druckraum 112 abströmen kann, um unmittelbar in die Verzahnung 130 der Außen-Kupplungselemente 132 einzudringen, so dass die Verzahnung 148 weiterhin als Strömungsdurchlass 150 für das fluidförmige Medium zwischen abtriebsseitigem Druckraum 112 und hydrodynamischem Kreis 134 wirksam ist.

Auch beim Öffnen der Überbrückungskupplung 64 oder aber bei geöffneter Überbrückungskupplung 64 wird das fluidförmige Medium nach Eintritt in die Verzahnung 130 der Außen-Kupplungselemente 132 zunächst über zumindest einen Teil des Verzahnungsbereiches axial weitergeleitet, um anschließend über den Reibbereich 140 der Kupplung 120 und den Kühlraum 220 über den Strömungsdurchgang 100 und/oder 102 und damit über die dritte Versorgungsleitung 78 zum Fluidverteiler 82 abzuströmen.

Durch die Trennwandung 110 wird also, unabhängig vom jeweiligen Betriebszustand der Überbrückungskupplung 64, jeweils dafür gesorgt, dass der Strömungsdurchlass 150 die jeweils einzige Strömungsverbindung zwischen dem abtriebsseitigen Druckraum 112 und dem Kühlraum 220 darstellt, und dadurch eine Zwangsdurchströmung zwischen diesen beiden Räumen 112, 220 der fluidbefüllten Kopplungsanordnung 3 allein über die Kupplung 120 herbei geführt ist.

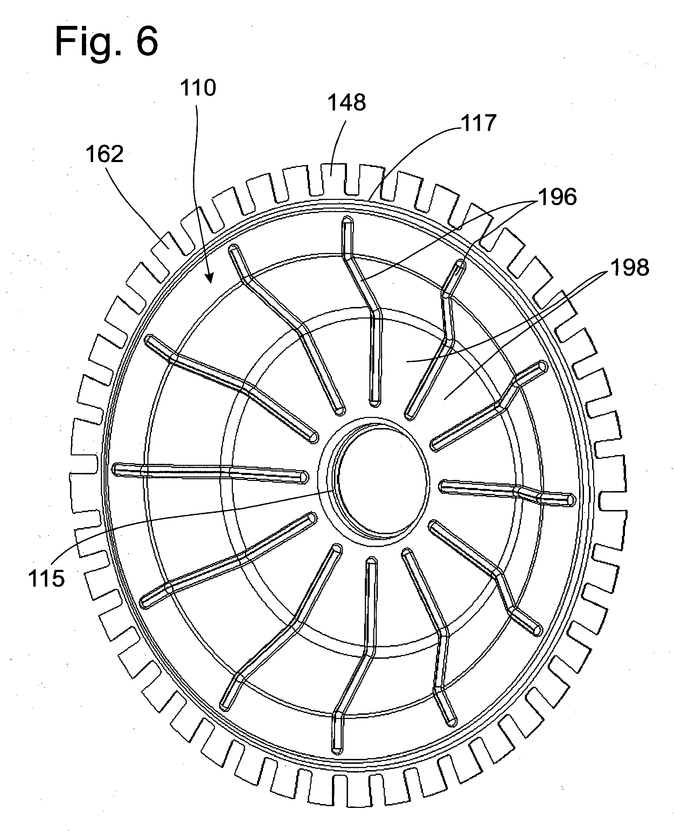

Zur Realisierung eines problemlosen Durchflusses des fluidförmigen Mediums durch den Reibbereich 140 der Kupplung 120 sind innerhalb des Erstreckungsbereiches des Reibbereichs 140, bevorzugt hierbei in Reibbelägen 172, Nutungen 174 vorgesehen. Beispielhaft zeigt Fig. 6 einen derartigen Reibbelag 172, bestehend aus einzelnen Reibbelagsegmenten 178, die, jeweils mit Versatz in Umfangsrichtung zueinander, auf einem Trägerblech 176 einer der Innen-Kupplungselemente 138 aufgebracht sind. Auf diese Weise sind die Nutungen 174 auf der vollen Tiefe der jeweils in Umfangsrichtung angrenzenden Reibbelagsegmente 178 nutzbar. Eine derartige Ausführung unterstützt, in Kombination mit einer hinreichenden Bemessung der Anzahl und Breite der Nutungen 174, einen Strömungsdurchfluss ohne wesentlichen Drosselungseinfluss, was aufgrund des bereits einen Drosselungseinfluss ausübenden Strömungsdurchlasses 150 zwischen dem abtriebsseitigen Druckraum 112 und dem Kühlraum 220 problemlos möglich ist.

Abweichend von der Strömungsführung bei der zuvor beschriebenen Variante kann zum Öffnen der Überbrückungskupplung 64 oder bei offener Überbrückungskupplung 64 die Zuführung fluidförmigen Mediums natürlich auch vom Fluidverteiler 82 über die dritte Versorgungsleitung 78 erfolgen, so dass das Medium nach Durchgang durch den Kühlraum 220 sowie die Kupplung 120 über den Strömungsdurchgang 150 in den abtriebsseitigen Druckraum 112 gelangt, um dort nach radial innen zu strömen, und über die zweite Versorgungsleitung 76 wieder dem Fluidverteiler 82 zugeführt zu werden. Bei Wahl dieser Durchströmungsrichtung liegt allerdings im Kühlraum 220 ein höherer Druck an als im abtriebsseitigen Druckraum 112, was eine Axialverlagerung der Trennwandung 110 in Richtung zum Kolben 62 und dadurch eine Ablösung der Trennwandung 110 vom benachbarten Anfangs-Kupplungselement 122 zur Folge hat, wodurch ein Spalt 222 zwischen der Trennwandung 110 und dem Anfangs-Kupplungselement 122 entstehen kann. Hierdurch kann eine im Kühlraum 220 verbleibende Restleckage entstehen, indem diese in den Spalt 222 einsickert. Dies wirkt sich aufgrund der offenen Überbrückungskupplung 64 allerdings nicht negativ aus, da die zu kühlende Kupplung 120 dann zumindest im Wesentlichen ohne Reibungseinfluss ohne Erhitzung bleibt. Außerdem wird trotz des Spaltes 222 der Hauptanteil des den Strömungsdurchlass 150 durchströmenden Fluids in den abtriebsseitigen Druckraum 112 gelangen.

Fig. 4 zeigt eine Abdichtung 160 der Trennwandung 110 gegenüber der antriebsseitigen Gehäusenabe 15, auf welcher die Trennwandung 110 gemeinsam mit dem Kolben 62 zentriert ist. Die Abdichtung 160 ist demnach radial zwischen der Trennwandung 110 und der antriebsseitigen Gehäusenabe 15 angeordnet. An der exakt gleichen Stelle kann die Abdichtung 160 aber auch als Spaltdichtung 116 ausgeführt sein, wie Fig. 3 zeigt. Diese Stelle hat den Vorteil, dass Kolben 62 und Trennwandung 110 nicht nur radial außen am Gehäuse 5 aufgenommen sind, sondern auch radial innen. Hierdurch wird wegen des Fehlens einer Differenzdrehzahl sowohl die radial innere Kolbendichtung 68 als auch die der Trennwandung 110 zugeordnete Abdichtung 160 weniger belastet als bei Anordnung auf der Turbinendämpfernabe 52.

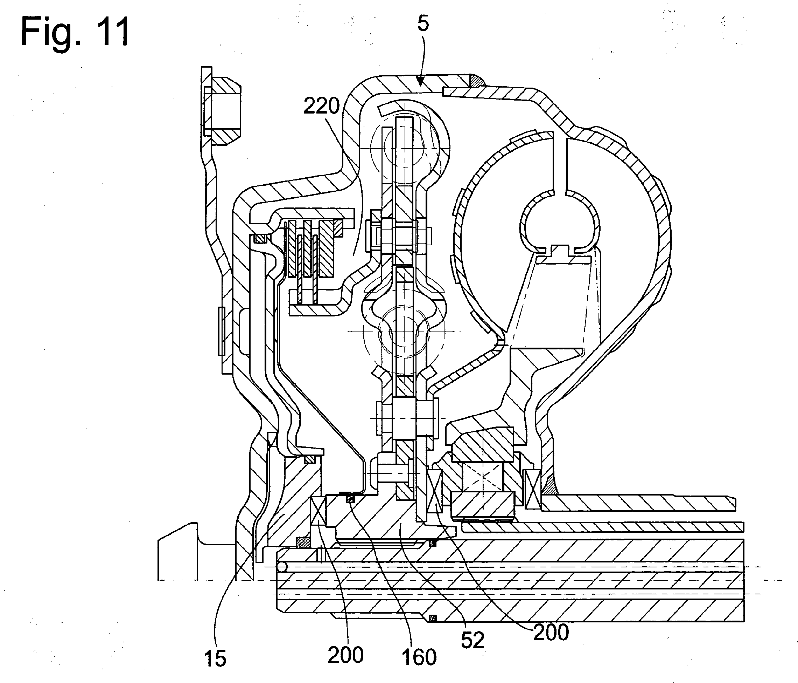

Eine der Fig. 3 oder 4 ähnliche Anordnung zeigt Fig. 11, bei welcher der Kolben 62 unverändert auf der antriebsseitigen Gehäusenabe 15 zentriert ist, die Trennwandung 110 dagegen auf der Torsionsdämpfernabe 52. Um eine eventuelle Höherbelastung der der Trennwandung 110 zugeordneten Abdichtung 160 zu begrenzen, wird zwischen der antriebsseitigen Gehäusenabe 15 und der Torsionsdämpfernabe 52 eine Lagerung 200 vorgesehen, die je nach konstruktiver Ausbildung als Wälz- oder Gleitlager und mit Wirkrichtung in Radial- und/oder Axialrichtung dafür sorgen kann, dass die Getriebeeingangswelle 19 gegenüber dem Gehäuse 5 mit geringeren Versätzen sowie geringerer Unwucht wirksam ist.

Fig. 7 zeigt eine Drehsicherung 162, die von derjenigen in Fig. 2 abweicht. Hier ist die Trennwandung 110 im Bereich ihres radial äußeren Endes 117 mit Vorsprüngen 166 versehen, die sich, Umfangsversatz zueinander aufweisend, in Richtung zum benachbarten Anfangs-Kupplungselement 122 erstrecken, um dort in entsprechende Aussparungen 164 zumindest im wesentlichen formschlüssig einzudringen, und damit eine Drehverbindung zu diesem Anfangs-Kupplungselement 122 herzustellen. Da das Anfangs-Kupplungselement 122 bei der vorliegenden Ausführung als Außen-Kupplungselement 132 ausgebildet ist, wird auf diese Weise die Trennwandung 110 an das Gehäuse 5 und damit an den Antrieb 11 angebunden. Der Strömungsdurchlass 150 liegt bei dieser Ausführung radial außerhalb des radial äußeren Endes 117 der Trennwandung 110 und wird bezüglich seines Strömungsquerschnittes durch die Verzahnung 130 des Gehäusedeckels 20 begrenzt.

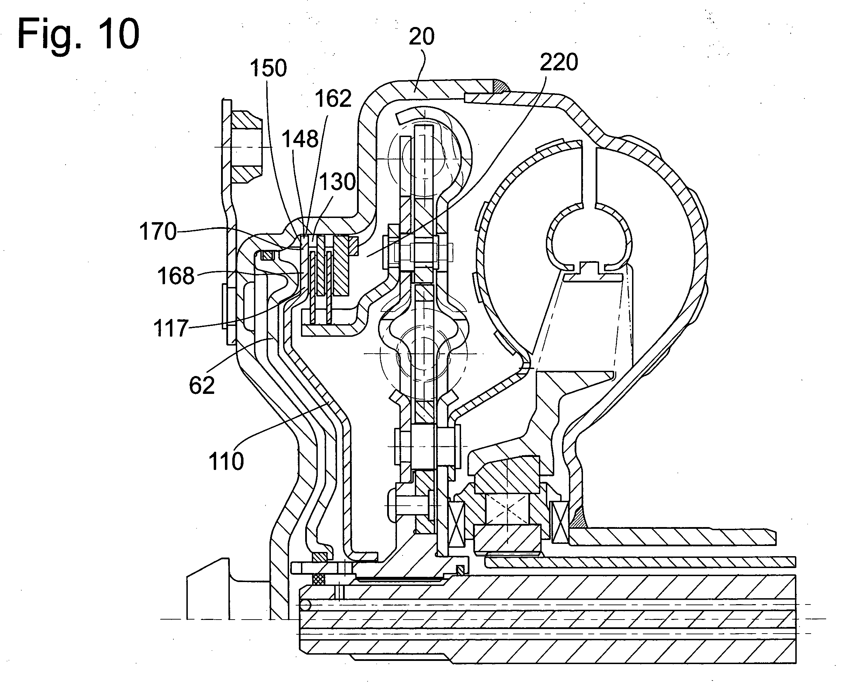

Eine andere diesbezügliche Ausführung ist in Fig. 10 gezeigt, wobei die Trennwandung 110 im Bereich ihres radial äußeren Endes 117 durch einen Radialansatz 168 die Funktion des bisherigen Anfangs-Kupplungselementes 122 übernimmt, und dadurch funktional als Ersatz-Kupplungselement 170 wirksam ist. Der sich hierdurch ergebende Vorteil liegt in der Einsparung des Anfangs-Kupplungselementes 122 als eigenständiges Bauteil. Zur Ausbildung der Drehsicherung 162 ist die Verzahnung 148 in den Radialansatz 168 integriert, und greift in die Verzahnung 130 des Gehäusedeckels 20 ein. Somit ist auch bei dieser Ausführung die Trennwandung 110 drehfest an den Antrieb 11 angebunden. Der Strömungsdurchlass 150 entsteht, wie auch bei der Ausführung nach Fig. 2, im Bereich der Verzahnung 148 in Verbindung mit der Verzahnung 130 des Gehäusedeckels 20.

Fig. 8 zeigt eine Ausführung, bei welcher am Kolben 62 Zapfen 182 mit Versatz in Umfangsrichtung vorgesehen sind, die sich jeweils in Richtung zur Trennwandung 110 erstrecken, und je eine zugeordnete Öffnung 188 derselben durchdringen. Die Zapfen 182 bilden somit eine Axialgleitführung 180, die mit den als Aufnahmen 186 wirksamen Öffnungen 188 eine Kolbendrehsicherung 192 für den Kolben 62 bilden, in Achsrichtung aber eine Relativbewegung zwischen dem Kolben 62 und der Trennwandung 110 zulassen. Die Kolbendrehsicherung 192 ist mit Vorzug in einem radial mittleren Abschnitt 194 von Kolben 62 und Trennwandung 110 angeordnet.

Mit Vorzug im gleichen Radialbereich, aber mit anderer konstruktiver Ausbildung versehen, zeigt Fig. 9 eine weitere Kolbendrehsicherung 192. Bei dieser sind als Axialgleitführungen 180 an der Trennwandung 110 axial vorspringende Kassetten 184 vorgesehen, von denen jede in eine zugeordnete, als Aufnahme dienende, am Kolben 62 vorgesehene, aber zeichnerisch nicht dargestellte Kassettenhalterung eingreift.

Fig. 6 zeigt die Trennwandung 110 in Draufsicht. In dieser Darstellung sind sehr deutlich Radialprofilierungen 196 erkennbar, von denen, in Umfangsrichtung gesehen, jeweils zwei je einen Strömungskanal 198 zwischen sich begrenzen. Hierdurch soll eine unter dem Einfluss der Korioliskraft begünstigte Wirbelbildung zwischen dem Kolben 62 und der Trennwandung 110 zumindest reduziert werden.

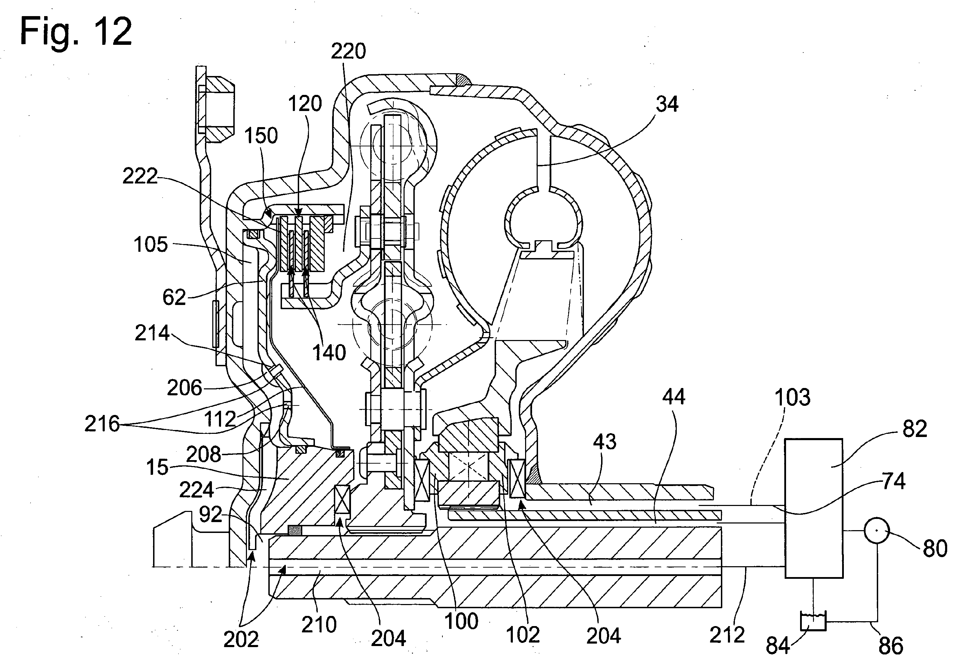

Während bislang ausschließlich Ausführungen der fluidbefüllten Kopplungsanordnung 3 mit drei Versorgungsleitungen 75, 76 und 78 behandelt sind, kurz als Drei-Leitungs-Systeme bezeichnet, ist in Fig. 12 ein Zwei-Leitungs-System dargestellt, das zusätzlich zu einer ersten Versorgungsleitung 202 eine zweite Versorgungsleitung 204 aufweist. Die erste Versorgungsleitung 202 entspricht funktional der zu Fig. 2 mit Bezugsziffer 75 beschriebenen ersten Versorgungsleitung, während die zweite Versorgungsleitung 204 der zu Fig. 2 mit Bezugsziffer 78 beschriebenen dritten Versorgungsleitung funktional entspricht, so dass diesbezüglich keine weitergehende Beschreibung erforderlich erscheint.

Als Unterschied verbleibt lediglich der Strömungsweg zur Versorgung des abtriebsseitigen Druckraumes 112 mit fluidförmigem Medium. Bei geschlossener Überbrückungskupplung 64 stammt das fluidförmige Medium aus dem antriebsseitigen Druckraum 105, und zwar über eine im Kolben 62 vorgesehene erste Verbindung 208, die als Teil einer Drossel 216 wirksam ist, und somit lediglich einen begrenzten Volumenstrom aus dem antriebsseitigen Druckraum 105 in den abtriebsseitigen Druckraum 112 übertreten lässt.

Die Versorgung des antriebsseitigen Druckraumes 105 erfolgt durch Fluidzufuhr vom Fluidverteiler 82 über die der ersten Versorgungsleitung 202 zugeordnete, in die Mittenbohrung 210 der Getriebeeingangswelle 19 mündende Strömungsleitung 212 sowie die ebenfalls der ersten Versorgungsleitung 202 zugeordnete Umlenkkammer 92, um von dieser über Kanäle 224 in der antriebsseitigen Gehäusenabe 15 in den antriebsseitigen Druckraum 105 zu gelangen. Aufgrund des dort bei diesem Betriebszustand vorherrschenden Überdruckes gegenüber dem abtriebsseitigen Druckraum 112 wird das fluidförmige Medium vom antriebsseitigen Druckraum 105 über die Verbindung 208 in den abtriebsseitigen Druckraum 112 gefördert. Ein in den Kolben 62 integriertes Ventil 206, dem eine als weiterer Teil der Drossel 216 dienende zweite Verbindung 214 zwischen den Druckräumen 105 und 112 zugeordnet ist, ist bei diesem Betriebszustand zur Sperrung der zweiten Verbindung 214 verschlossen.

Das derart in den abtriebsseitigen Druckraum 112 gelangte fluidförmige Medium gelangt fliehkraftbedingt innerhalb des Druckraumes 112 nach radial außen, um dort in bereits beschriebener Weise über den Strömungsdurchlass 150 und die Verzahnung 130 des Gehäusedeckels 20 als Zwangsströmung zum Reibbereich 140 der Kupplung 120 zu gelangen, und von dort aus nach Verwendung im Kühlraum 220 über die zweite Versorgungsleitung 204 zum Fluidverteiler 82 zurückgeführt zu werden.

Für eine zumindest teilweise Öffnung der Überbrückungskupplung 64 oder aber eine vollständige Öffnung der Überbrückungskupplung 64 wird die zweite Versorgungsleitung 204 mit einem Überdruck gegenüber dem antriebsseitigen Druckraum 105 beaufschlagt, woraufhin das fluidförmige Medium über die Kupplung 120 und die den Außen-Kupplungselementen 132 zugeordnete Verzahnung 130 in den Erstreckungsbereich der Trennwandung 110 gelangt, um über deren als Strömungsdurchlass 150 für das fluidförmige Medium dienende Verzahnung 148 in den abtriebsseitigen Druckraum 112 abzuströmen. Durch den sich hierdurch im abtriebsseitigen Druckraum 112 gegenüber dem antriebsseitigen Druckraum 105 erhöhenden Druck wird der Kolben 62 in Richtung zum Gehäusedeckel 20 verlagert, und hebt dadurch die auf die Kupplungselemente 132, 138 übertragene Axialkraft zumindest teilweise auf.

Aufgrund des Überdruckes im abtriebsseitigen Druckraum 112 gegenüber dem antriebsseitigen Druckraum 105 wird im abtriebsseitigen Druckraum 112 enthaltenes fluidförmiges Medium über die erste Verbindung 208 in den antriebsseitigen Druckraum 105 gefördert. Gleichzeitig löst der Überdruck im abtriebsseitigen Druckraum 112 eine Öffnung des Ventils 206 aus, so dass auch die demselben zugeordnete zweite Verbindung 214 frei gegeben ist. Fluidförmiges Medium strömt dann verstärkt über die Verbindungen 208 und 214 in den antriebsseitigen Druckraum 105 ab, um von dort aus über die erste Versorgungsleitung 202 zum Fluidverteiler 82 zu gelangen.

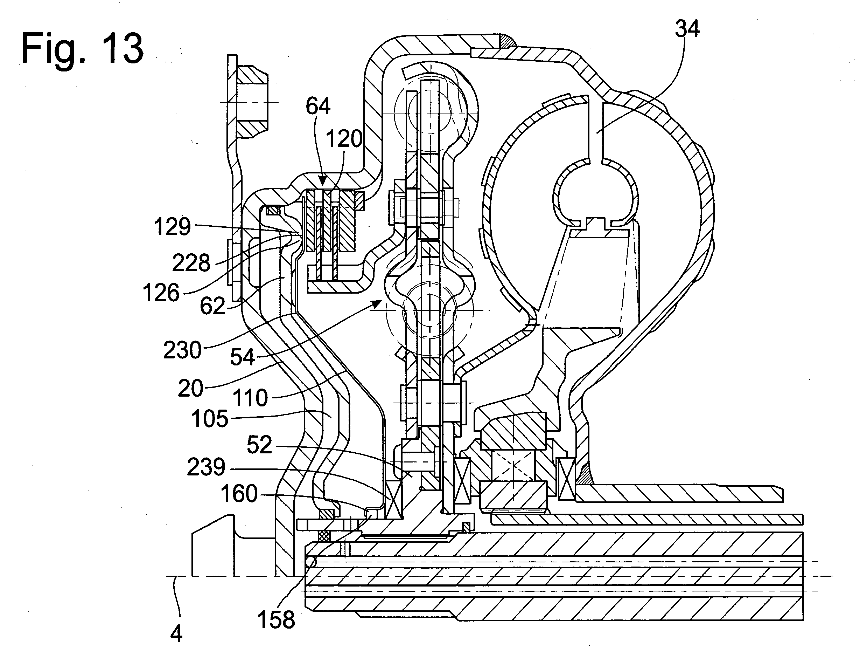

In Fig. 13 ist eine Trennwandung 110 dargestellt, die als Axialfeder 230 ausgebildet ist. Radial innen ist die Trennwandung 110 über eine Stützlagerung 239 an der Torsionsdämpfernabe 52 axial abgestützt, und über eine Abdichtung 160 gegenüber der Torsionsdämpfernabe 52 radial abgedichtet. Von besonderem Vorteil ist, wenn die Trennwandung 110 eine Axialkraft in Richtung zur Gehäusewandung 20 ausübt, und hierdurch den Kolben 62, solange bewusst kein Überdruck im antriebsseitigen Druckraum 105 gegenüber dem hydrodynamischen Kreis 34 aufgebaut wird, stabil an der Gehäusewandung 20 in Anlage hält. Vorzugsweise wird hierbei die Trennwandung 110 mit Vorspannung in Achsrichtung eingesetzt.

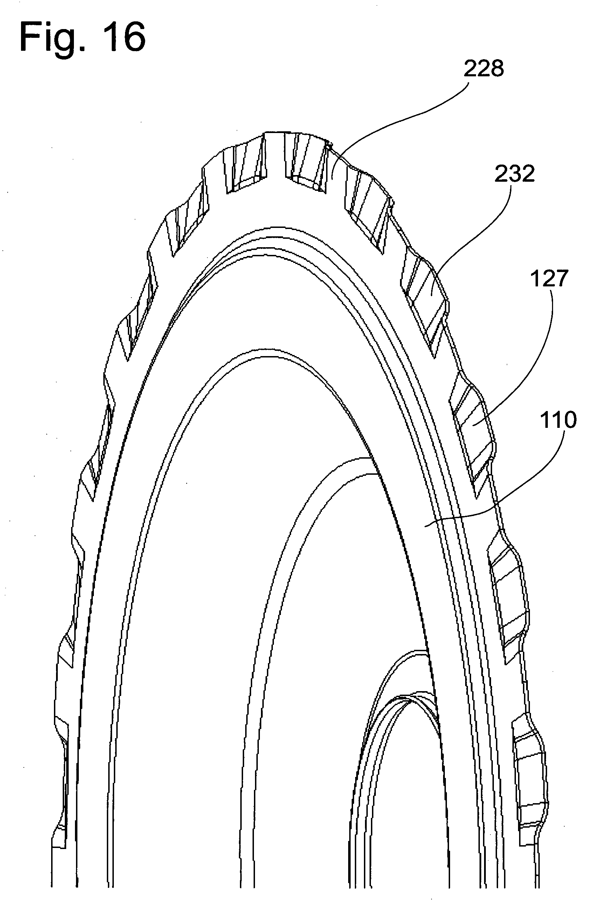

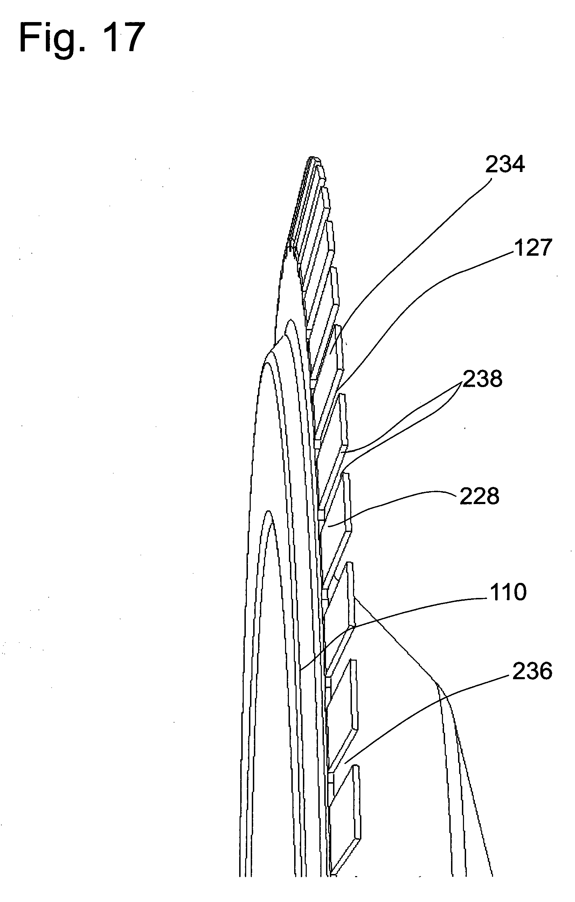

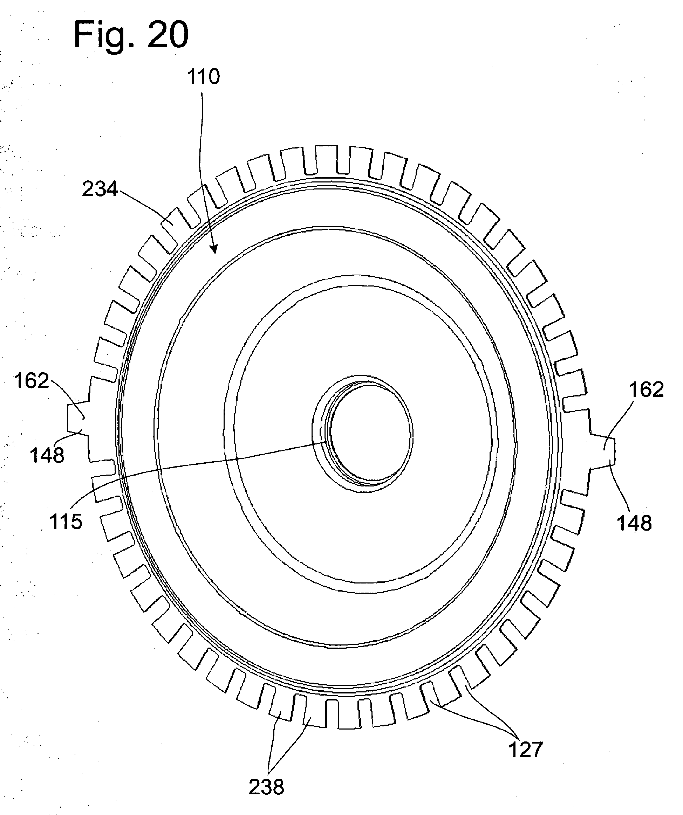

Mit Vorzug verfügt die Trennwandung 110 in einem vorbestimmten Radialabstand zur Drehachse 4 des Gehäuses 5 über eine integrierte Zone 228, die beispielsweise im radialen Erstreckungsbereich der Profilierung 126 am Kolben 62 vorgesehen ist und als Federzone ausgebildet sein kann. Diese integrierte Zone 228 kann entweder, wie in Fig. 13 gezeigt, ebenflächig sein, oder aber gemäß Fig. 16 mit einer Wellprofilierung 232 sowie gemäß Fig. 17 oder 20 mit einer unterbrechungsbehafteten Profilierung 238. Die Fig. 16 oder 17 zeigen jeweils eine Herauszeichung der Trennwandung 110.

Gemäß Fig. 16 ist die integrierte Zone 228 der Trennwandung 110 in Umfangsrichtung mit alternierend sich änderndem Axialabstand zum Kolben 62 ausgebildet, so dass in Umfangsrichtung die bereits erwähnte Wellprofilierung 232 entsteht. Im Gegensatz hierzu zeigt Fig. 17 die integrierte Zone 228 der Trennwandung 110 mit sich nach radial außen erstreckenden Zungen 234, zwischen denen jeweils Umfangsunterbrechungen 236 in der Trennwandung 62 vorgesehen sind, um auf diese Weise in Umfangsrichtung die unterbrechungsbehaftete Profilierung 238 entstehen zu lassen.

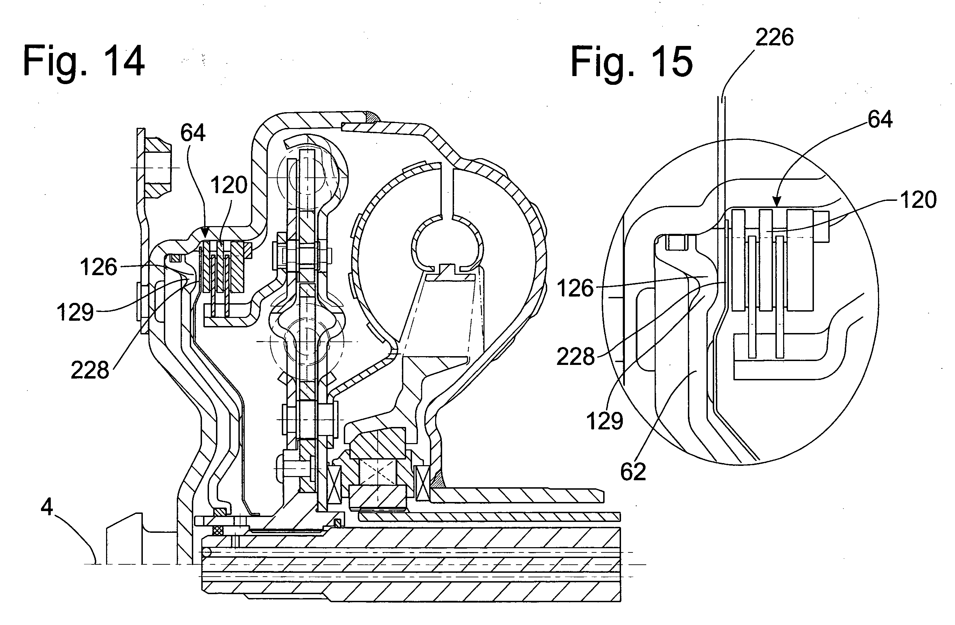

Die Fig. 14 und 15 zeigen ebenfalls eine Trennwandung 110, die als Axialfeder 230 wirksam ist. Abweichend von der Ausgestaltung in Fig. 13 zeigt die Variante in Fig. 14 und 15 allerdings in einer Position des Kolbens 62, bei welcher die Überbrückungskupplung 64 keine Wirkverbindung zwischen der Antriebs- und der Abtriebsseite der Kopplungsanordnung 3 herstellt, einen Axialspalt 226 (Fig. 15) zwischen dem Kolben 62 und der Trennwandung 110. Dieser Axialspalt 226 bewirkt bei einer Annäherung des Kolbens 62 an die Kupplung 120 zunächst eine Anlage der Trennwandung 110 an das axial benachbarte, radial äußere Kupplungselement 132, und bei weiterer Annäherung des Kolbens 62 an die Kupplung 120 zunächst eine elastische Verformung der Trennwandung 110 bei gleichzeitiger Minderung der Breite des Axialspaltes 226, bis der letztgenannte schließlich völlig aufgebraucht ist. Bis zum restlosen Aufbrauch des Axialspaltes 226 wirkt die Trennwandung 110 wie eine Tellerfeder, bei welcher sich der Bereich zwischen den axialen Abstützungen der Trennwandung 110 elastisch verformt. In dieser Phase des Aufbaus einer Wirkverbindung zwischen der Antriebs- und der Abtriebsseite der Kopplungsanordnung 3 wirkt die Trennwandung 110 demnach als Anlegefederung für den Kolben 62. Ist der Axialspalt 226 dagegen restlos aufgebraucht, so entspricht die Wirkungsweise der vorliegenden Ausführung der in Fig. 13 gezeigten Ausgestaltung.

Zurückkommend auf die Fig. 16 und 17, können die dort gezeigten Ausführungen der Trennwandung 110, wie bereits behandelt, über eine integrierte Zone 228 verfügen, die sowohl an einer als Axialfeder 230 ausgebildeten Trennwandung 110 als auch an einer Trennwandung 110 mit axial relativ hoher Steifigkeit ausgebildet sein kann. Unabhängig von der jeweils gewählten axialen Steifigkeit erlauben die Ausführungen der Trennwandung 110 gemäß den Fig. 16, 17 und 20 jeweils eine Art der Strömungsführung, die von derjenigen der Trennwandung 110 bei Fig. 2 abweicht. Fig. 2 zeigt nämlich den Druckbereich 129 des Kolbens 62 mit einer Profilierung 126 zur Bildung der integrierten Strömungskanäle 127, während die Trennwandung 110 zumindest im Erstreckungsbereich des Druckbereiches 129 des Kolbens 62 ebenflächig ist. Im Gegensatz dazu ermöglichen die Ausführungen der Trennwandung 110 gemäß den Fig. 16, 17 und 20 jeweils einen Kolben 62 mit einem ebenflächigen Druckbereich 129, da diese Trennwandungen 110 jeweils mit einer Profilierung 232 oder 238 zur Bildung der Strömungskanäle 127 versehen ist. Im Fall der Fig. 16 entstehen die Strömungskanäle 127 aufgrund der Wellprofilierung 232, im Fall der Fig. 17 oder 20 jeweils durch die in Umfangsrichtung zwischen den Zungen 234 verbleibenden Umfangsunterbrechungen 236. Die Strömungskanäle 127 stehen in Strömungsverbindung mit dem Strömungsdurchlass 150 (Fig. 7), welcher an der an der Innenseite des Axialabschnittes 128 des Gehäusedeckels 20 vorgesehenen Verzahnung 130 vorgesehen ist.

Fig. 20 zeigt anhand der unterbrechungsbehafteten Profilierung 238 die räumliche und funktionale Trennung der Strömungskanäle 127 von der als Drehsicherung 162 dienenden Verzahnung 148 der Trennwandung 110. Diese Verzahnung 148 steht, wie bereits beschrieben, in Drehverbindung mit der Verzahnung 130 an der Innenseite des Axialabschnittes 128 des Gehäusedeckels 20.

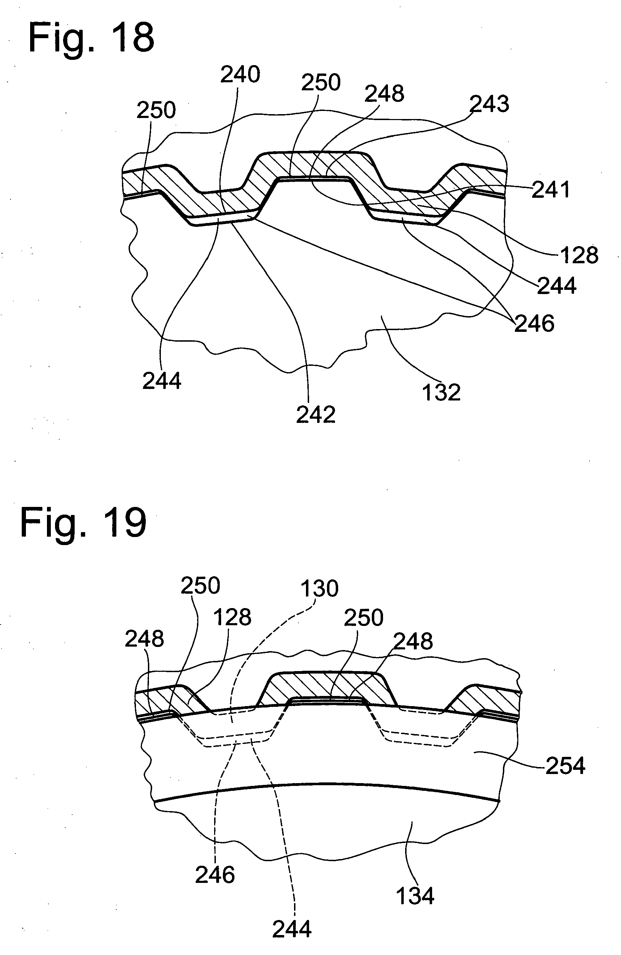

Die Fig. 18 und 19 schließlich zeigen einen Weg für eine Zwangskühlung der Kupplungselemente 132 und 138 der Kupplung 120. Hierzu ist an dem Axialabschnitt 128 des Gehäuses 5 die Verzahnung 130 derart ausgebildet, dass diese zum einen zumindest im Wesentlichen jeweils ohne Spiel in Umfangsrichtung mit den radial äußeren Kupplungselementen 132 sowie mit dem End-Kupplungselement 134 in Drehverbindung steht, und zum anderen mit ihren Zahnkopfbereichen 240 in je einen Zahnfußbereich 242 jeweils eines radial äußeren Kupplungselementes 132 sowie des End-Kupplungselementes 134 eingreift. Hierbei sind die Zahnkopfbereiche 240 der Verzahnung 130 am Axialabschnitt 128 des Gehäuses 5 jeweils bis auf einen Radialspalt 244 an die jeweils zugeordneten Zahnfußbereiche 242 des jeweiligen radial äußeren Kupplungselementes 132 sowie des End-Kupplungselementes 134 herangeführt, wobei diese Radialspalte 244 jeweils als Strömungspassagen 246 für fluidförmiges Medium dienen.

Im Gegensatz dazu stehen die Zahnfußbereiche 243 der am Axialabschnitt 128 des Gehäuses 5 vorgesehenen Verzahnung 130 zumindest im Wesentlichen jeweils ohne Radialspalt mit je einem Zahnkopfbereich 241 jeweils eines radial äußeren Kupplungselementes 132 sowie des End-Kupplungselementes 134 in Eingriff, da die Zahnkopfbereiche 241 zumindest im Wesentlichen bis unmittelbar an die jeweils zugeordneten Zahnfußbereiche 243 der Verzahnung 130 angenähert sind, und dadurch Heranführungen 248 bilden, die jeweils als Strömungshindernisse 250 für fluidförmiges Medium dienen.

Das End-Kupplungselement 134 ist den radial äußeren Kupplungselementen 132 der Kupplung 120 als axialer Anschlag zugeordnet, und mittels eines in eine umlaufende Nut 252 des Axialabschnittes 128 des Gehäuses 5, insbesondere hierbei der Verzahnung 130, eingelassenen Stützringes 136 gegenüber der Verzahnung 130 axial positioniert ist. Der Stützring 136 ist aufgrund seines Eingriffes in die umlaufende Nut 252 als eine Fluiddichtung 254 wirksam, an welcher das durch die Strömungspassagen 246 ankommende fluidförmige Medium zumindest im Wesentlichen von einem Verlassen des Kühlraumes 220 abgehalten wird. Das fluidförmige Medium wird somit gezwungen, den Kühlraum 220 zu durchströmen und kann diesen lediglich nach Passage der Kupplungselemente 132 und 138 verlassen, um in den hydrodynamischen Kreis 34 überzutreten. Der Stützring 136 unterstützt demnach aufgrund seiner Wirkung als Fluiddichtung 254 die Heranführungen 248, die, wie bereits erwähnt, Strömungshindernis 250 dienen.

### Bezugszeichenliste

- 1: Antriebsstrang
- 3: Kopplungsanordnung
- 4: Drehachse
- 5: Gehäuse
- 7: Befestigungsorgane
- 9: Kopplungselement
- 11: Antrieb
- 13: Brennkraftmaschine
- 15: antriebsseitige Gehäusenabe
- 17: Getriebeanordnung
- 18: Abtrieb
- 19: Getriebeeingangswelle
- 20: Gehäusedeckel
- 22: Pumpenradschale
- 24: abtriebsseitige Gehäusenabe
- 26: Pumpenrad
- 28: Turbinenradschale
- 30: Turbinenrad
- 32: Leitrad
- 34: hydrodynamische Kreis
- 36: Freilauf
- 38: Axiallagerung
- 40: Verzahnung
- 42: Stützwelle
- 43,44: Kanal
- 46,48: Axialdurchgänge
- 50: Verzahnung
- 52: Torsionsdämpfernabe
- 54: Torsionsschwingungsdämpfer
- 58: Axiallagerung
- 60: Stützlager
- 62: Kolben
- 64: Überbrückungskupplung
- 66: Kupplungseinrichtung
- 68,70: Kolbendichtungen
- 71: Dichtung
- 72,73,74: Strömungsleitungen
- 75,76: Versorgungsleitungen
- 78: Versorgungsleitung
- 80: Versorgungsquelle
- 82: Fluidverteiler
- 84: Vorratsbehälter
- 86: Verbindungsleitung
- 88,90: Radialdurchgänge
- 92: Umlenkkammer
- 94: antriebsseitiges Ende der GEW
- 96: Radialverbindung
- 98: Verschluss
- 100,102: Strömungsdurchgänge
- 103: Strömungsleitung
- 105: antriebsseitiger Druckraum
- 107: Antriebsseite des Kolbens
- 110: Trennwandung
- 112: abtriebsseitiger Druckraum
- 114: Abtriebsseite des Kolbens
- 115: radial inneres Ende der Trennwandung
- 116: Spaltdichtung
- 117: radial äußeres Ende der Trennwandung
- 120: Kupplung
- 122: Anfangs-Kupplungselement
- 124: Distanzhalter
- 125: Strömungskanäle
- 126: Profilierung
- 127: Strömungskanäle
- 128: Axialabschnitt
- 129: Druckbereich
- 130: Verzahnung
- 132: radial äußeres Kupplungselement
- 134: End-Kupplungselement
- 136: Stützring
- 138: radial inneres Kupplungselement
- 140: Reibbereich
- 142: Verzahnung
- 144: Träger
- 146: Anbindung
- 148: Verzahnung
- 150: Strömungsdurchlass
- 158: Berührungsdichtung
- 160: Abdichtung
- 162: Drehsicherung
- 164: Aussparung
- 166: Vorsprung
- 168: Radialansatz
- 170: Ersatz-Kupplungselement
- 172: Reibbelag
- 174: Nutungen
- 176: Trägerblech
- 178: Reibbelagsegmente
- 180: Axialgleitführung
- 182: Zapfen
- 184: Kassetten
- 186: Aufnahme
- 188: Öffnung
- 192: Kolbendrehsicherung
- 194: radial mittlerer Abschnitt
- 196: Radialprofilierungen
- 198: Strömungskanal
- 200: Lagerung
- 202: erste Versorgungsleitung
- 204: zweite Versorgungsleitung
- 206: Ventil
- 208: Verbindung
- 210: Mittenbohrung
- 212: Strömungsleitung
- 214: Verbindung
- 216: Drossel
- 220: Kühlraum
- 222: Spalt
- 224: Kanäle
- 226: Axialspalt
- 228: integrierte Zone
- 230: Axialfeder
- 232: Wellprofilierung
- 234: Zungen
- 236: Umfangsunterbrechungen
- 238: unterbrechungsbehaftetes Profil
- 239: Stützlagerung
- 240,241: Zahnkopfbereiche
- 242,243: Zahnfußbereiche
- 244: Radialspalt
- 246: Strömungsdurchlass
- 248: Heranführung
- 250: Strömungshindernis
- 252: umlaufende Nut
- 254: Fluiddichtung

## Patentansprüche

1. Fluidbefüllte Kopplungsanordnung (3) mit einer über ein Gehäuse (5) verfügenden Kupplungseinrichtung (66), aufweisend einen im Gehäuse (5) zumindest im Wesentlichen abgedichtet und axial verlagerbar angeordneten Kolben (62) und eine in einem Kühlraum (220) vorgesehene, einen Reibbereich aufweisende Kupplung (120), wobei durch die Kupplungseinrichtung (66) in Abhängigkeit von der Position des Kolbens (62) in Bezug zur Kupplung(120) eine Wirkverbindung zwischen einem Antrieb (11) und einem Abtrieb (18) zumindest teilweise herstellbar oder aufhebbar ist, wobei durch den Kolben (62) ein zwischen einer Antriebsseite des Kolbens (62) und einer benachbarten Gehäusewandung (20) vorgesehener antriebsseitiger Druckraum (105) von einem an eine Abtriebsseite des Kolbens (62) vorgesehenen abtriebsseitigen Druckraum (112) zumindest im Wesentlichen getrennt und zumindest einem dieser Druckräume (105,112) sowie dem Kühlraum (220) wenigstens eine Versorgungsleitung (75, 76, 78) zugeordnet ist, die an wenigstens einer Versorgungsquelle (80) angeschlossen ist, wobei der abtriebsseitige Druckraum (112) zumindest im wesentlichen einerseits durch die Abtriebsseite (114) des Kolbens (62) und andererseits durch eine dem Kolben (62) zugeordnete Trennwandung (110) begrenzt ist, die ihrerseits zwischen dem abtriebsseitigen Druckraum (112) und dem Kühlraum (220) wirksam ist, und die zumindest im Wesentlichen im Bereich ihres radial äußeren Endes (117) über eine Drehsicherung (162) verfügt,
**dadurch gekennzeichnet,**
**dass** die Trennwandung (110) unabhängig von der jeweiligen axialen Position des Kolbens (62) und damit vom Betriebszustand der Kupplungseinrichtung (66) stets in Anlage an dem jeweils benachbarten Bauteil (122) der Kupplung (120) gehalten ist, und dass die Trennwandung (110) über die Drehsicherung (162) gegenüber dem Gehäuse (5) und damit dem Antrieb (11) eine drehfeste Verbindung herstellt.

2. Fluidbefüllte Kopplungsanordnung nach Anspruch 1,
**dadurch gekennzeichnet,**
**dass** die Inanlagehaltung der Trennwandung (110) am jeweils benachbarten Bauteil (122) der Kupplung (120) unter dem Einfluss eines Druckgefälles zwischen dem Druckraum (112) und dem Kühlraum (220) bestimmt ist.

3. Fluidbefüllte Kopplungsanordnung nach einem der Ansprüche 1 oder 2,
**dadurch gekennzeichnet,**
**dass** die Trennwandung (110) gegenüber dem Kolben (62) axial verlagerbar angeordnet ist.

4. Fluidbefüllte Kopplungsanordnung nach einem der Ansprüche 1 bis 3,
**dadurch gekennzeichnet,**
**dass** die Trennwandung (110) und/oder der Kolben (62) an ihren dem jeweils anderen Bauteil (62, 110) zugewandten Seiten mit Distanzhaltern (124) zur Schaffung von Strömungskanälen (125) zwischen Trennwandung (110) und Kolben (62) ausgebildet sind.

5. Fluidbefüllte Kopplungsanordnung nach einem der Ansprüche 1 bis 4,
**dadurch gekennzeichnet,**
**dass** der Kolben (62) und/oder die Trennwandung (110) über eine axiale Profilierung (126) zur Schaffung von Strömungskanälen (127) zwischen Trennwandung (110) und Kolben (62) verfügt.

6. Fluidbefüllte Kopplungsanordnung nach einem der Ansprüche 1 bis 5,
**dadurch gekennzeichnet,**
**dass** zwischen dem abtriebsseitigen Druckraum (112) und dem Kühlraum (220) ein Strömungsdurchlass (150) vorgesehen ist, der durch Positionierung im Anordnungsbereich der Kupplung (120) eine Zwangsbeströmung des Reibbereiches (140) derselben bewirkt.

7. Fluidbefüllte Kopplungsanordnung nach einem der Ansprüche 1 bis 6,
**dadurch gekennzeichnet,**
**dass** die Trennwandung (110) zumindest im wesentlichen in ihrem radial äußeren Bereich über den Strömungsdurchlass (150) zwischen dem abtriebsseitigen Druckraum (112) und dem Kühlraum (220) verfügt.

8. Fluidbefüllte Kopplungsanordnung nach einem der Ansprüche 1 bis 7,
**dadurch gekennzeichnet,**
**dass** die Drehsicherung (162) als Strömungsdurchlass (150) wirksam ist.

9. Fluidbefüllte Kopplungsanordnung nach Anspruch 7 oder 8 mit einer Verzahnung am Gehäusedeckel zur Drehsicherung antriebsseitiger Kupplungselemente der Kupplung,
**dadurch gekennzeichnet,**
**dass** die Drehsicherung (162) durch eine in die Verzahnung (130) des Gehäusedeckels (20) eingreifende Verzahnung (142) der Trennwandung (110) gebildet ist.

10. Fluidbefüllte Kopplungsanordnung nach Anspruch 7 oder 8,
**dadurch gekennzeichnet,**
**dass** die Drehsicherung (162) durch zumindest einen an der Trennwandung (110) vorgesehenen, in eine Aussparung (164) des benachbarten Kupplungselementes (122) formschlüssig eingreifenden Vorsprung (166) gebildet ist.

11. Fluidbefüllte Kopplungsanordnung nach Anspruch 7 oder 8,
**dadurch gekennzeichnet,**
**dass** die Trennwandung (110) über einen äußeren Radialansatz (168) verfügt, der, bei Wirksamkeit als Ersatz-Kupplungselement (170) für die vom Kolben beaufschlagbare Kupplung (120), am radial äußeren Ende (117) des Radialansatzes (168) eine Verzahnung (142) aufweist, die zum Eingriff in die Verzahnung (130) des Gehäusedeckels (20) bestimmt ist.

12. Fluidbefüllte Kopplungsanordnung nach einem der Ansprüche 1 bis 11,
**dadurch gekennzeichnet,**
**dass** durch eine am Kolben (62) und/oder an der Trennwandung (110) vorgesehene Axialgleitführung (180) eine Kolbendrehsicherung (192) für den Kolben (62) gebildet ist, die in eine zugeordnete Aufnahme (186) des jeweils benachbarten Bauteils, also Kolben (62) oder Trennwandung (110), eingreift, und eine Relativbewegung von Kolben (62) und Trennwandung (110) in Axialrichtung zulässt.

13. Fluidbefüllte Kopplungsanordnung nach Anspruch 12,
**dadurch gekennzeichnet,**
**dass** die Axialgleitführung (180) durch zumindest einen Zapfen (182) gebildet ist, der in je eine als Aufnahme (186) dienende Öffnung (188) axial verschiebbar eingreift.

14. Fluidbefüllte Kopplungsanordnung nach Anspruch 12,
**dadurch gekennzeichnet,**
**dass** die Axialgleitführung (180) durch zumindest eine Kassette (184) gebildet ist, die in je eine als Aufnahme (186) dienende Kassettenhalterung axial verschiebbar eingreift.

15. Fluidbefüllte Kopplungsanordnung nach Anspruch 12, 13 oder 14,
**dadurch gekennzeichnet,**
**dass** die Axialgleitführung (180) in Verbindung mit der Aufnahme (186) jeweils in einem radial mittleren Abschnitt (194) der Trennwandung (110) sowie des Kolbens (62) vorgesehen ist.

16. Fluidbefüllte Kopplungsanordnung nach einem der Ansprüche 1 bis 15 mit einem antriebsseitigen Druckraum, an welchen eine demselben unmittelbar zugeordnete erste Versorgungsleitung angeschlossen ist,
**dadurch gekennzeichnet,**
**dass** der abtriebsseitige Druckraum (112) entweder über eine demselben unmittelbar zugeordnete zweite Versorgungsleitung (76) oder über eine erste Verbindung (208) zur ersten Versorgungsleitung (75; 202) an die Versorgungsquelle (80) angeschlossen ist.

17. Fluidbefüllte Kopplungsanordnung nach Anspruch 16,
**dadurch gekennzeichnet,**
**dass** der abtriebsseitige Druckraum (112) durch die erste Verbindung (208) sowie durch eine in Abhängigkeit vom Schaltzustand eines Ventils (206) geöffnete zweite Verbindung (214) mit dem antriebsseitigen Druckraum (105) verbunden und damit an die erste Versorgungsleitung (75; 202) angeschlossen ist.

18. Fluidbefüllte Kopplungsanordnung nach Anspruch 17,
**dadurch gekennzeichnet,**
**dass** das Ventil (206) bei einem Überdruck im antriebsseitigen Druckraum (105) gegenüber dem abtriebsseitigen Druckraum (112) die zweite Verbindung (214) verschließt, bei umgekehrtem Druckverhältnis dagegen offen hält.

19. Fluidbefüllte Kopplungsanordnung nach einem der Ansprüche 1 bis 18 mit einem eine Torsionsdämpfernabe aufweisenden Torsionsschwingungsdämpfer, **dadurch gekennzeichnet,**
**dass** der Kolben (62) ebenso wie die Trennwandung (110) auf der Torsionsdämpfernabe (52) aufgenommen ist.

20. Fluidbefüllte Kopplungsanordnung nach einem der Ansprüche 1 bis 18 mit einer am Gehäusedeckel aufgenommenen antriebsseitigen Gehäusenabe,
**dadurch gekennzeichnet,**
**dass** der Kolben (62) an der antriebsseitigen Gehäusenabe (15) und die Trennwandung (110) an der Torsionsdämpfernabe (52) aufgenommen ist, wobei zwischen antriebsseitiger Gehäusenabe (15) und Torsionsdämpfernabe (52) zumindest eine zentrierende und/oder axial positionierende Lagerung (200) vorgesehen ist.

21. Fluidbefüllte Kopplungsanordnung nach einem der Ansprüche 1 bis 20,
**dadurch gekennzeichnet,**
**dass** die Trennwandung (110) zumindest an ihrem radial inneren Ende (115) gegenüber der antriebsseitigen Gehäusenabe (15) oder der Torsionsdämpfernabe (52) mit einer Abdichtung (160) versehen ist.

22. Fluidbefüllte Kopplungsanordnung nach Anspruch 21,
**dadurch gekennzeichnet,**
**dass** die Abdichtung (160) als Spaltdichtung (116) ausgebildet ist.

23. Fluidbefüllte Kopplungsanordnung nach Anspruch 21,
**dadurch gekennzeichnet,**
**dass** die Abdichtung (160) als Berührungsdichtung (158) ausgebildet ist.

24. Fluidbefüllte Kopplungsanordnung nach einem der Ansprüche 1 bis 23,
**dadurch gekennzeichnet,**
**dass** die Trennwandung (110) über Radialprofilierungen (196) zur beidseitigen Begrenzung von in Umfangsrichtung jeweils zwischen zwei Radialprofilierungen (196) verlaufenden Strömungskanälen (198) verfügt.

25. Fluidbefüllte Kopplungsanordnung nach einem der Ansprüche 1 bis 23,
**dadurch gekennzeichnet,**
**dass** die Trennwandung (110) über wenigstens eine integrierte Zone (228) verfügt.

26. Fluidbefüllte Kopplungsanordnung nach Anspruch 25,
**dadurch gekennzeichnet,**
**dass** die wenigstens eine integrierte Zone (228) der Trennwandung (110) in zumindest einem vorbestimmten Radialbereich relativ zur Drehachse (4) des Gehäuses (5) ausgebildet ist.

27. Fluidbefüllte Kopplungsanordnung nach Anspruch 25 oder 26,
**dadurch gekennzeichnet,**
**dass** die integrierte Zone (228) der Trennwandung (110) zumindest im Wesentlichen im Radialbereich des Druckbereichs (129) des Kolbens (62) vorgesehen ist.

28. Fluidbefüllte Kopplungsanordnung nach Anspruch 25, 26 oder 27,
**dadurch gekennzeichnet,**
**dass** die integrierte Zone (228) der Trennwandung (110) bei mit einer Profilierung (126) zur Bildung von Strömungskanälen (127) versehenen Druckbereich (129) des Kolbens (62) ebenflächig ausgebildet sein kann.

29. Fluidbefüllte Kopplungsanordnung nach Anspruch 25, 26 oder 27,
**dadurch gekennzeichnet,**
**dass** die integrierte Zone (228) der Trennwandung (110) in Umfangsrichtung mit alternierend sich änderndem Axialabstand zum Druckbereich (129) des Kolbens (62) ausgebildet ist, so dass in Umfangsrichtung eine Wellprofilierung (232) entsteht.

30. Fluidbefüllte Kopplungsanordnung nach Anspruch 25, 26 oder 27,
**dadurch gekennzeichnet,**
**dass** die integrierte Zone (228) der Trennwandung (110) mit sich nach radial außen erstreckenden Zungen (234) ausgebildet ist, zwischen denen jeweils Umfangsunterbrechungen (236) in der Trennwandung (62) vorgesehen sind, so dass in Umfangsrichtung eine unterbrechungsbehaftete Profilierung (238) entsteht.

31. Fluidbefüllte Kopplungsanordnung nach Anspruch 29 oder 30,
**dadurch gekennzeichnet,**
**dass** die integrierte Zone (228) bei Ausbildung der Trennwandung (110) mit einer Profilierung (232, 238) zur Bildung von Strömungskanälen (127) dient, so dass der Druckbereich (129) des Kolbens (62) ebenflächig ausgebildet sein kann.

32. Fluidbefüllte Kopplungsanordnung nach einem der Ansprüche 25 bis 31,
**dadurch gekennzeichnet,**
**dass** die Trennwandung (110) bei Ausbildung mit einer integrierten Zone (228) sowohl in ebenflächiger Ausführung als auch in Form einer Profilierung (232, 238) als Axialfeder (230) vorgesehen sein kann.

33. Fluidbefüllte Kopplungsanordnung nach einem der Ansprüche 1 bis 32 mit einer am Axialabschnitt (128) des Gehäuses (5) vorgesehenen Verzahnung (130), in welche jeweils ein radial äußeres Kupplungselement (132) zumindest im Wesentlichen jeweils ohne Spiel in Umfangsrichtung eingreift, wobei die Verzahnung (130) jeweils mit ihren Zahnkopfbereichen (240) in je einen Zahnfußbereich (242) jeweils eines radial äußeren Kupplungselementes (132) ragt, das seinerseits mit seinen Zahnkopfbereichen (241) in je einen Zahnfußbereich (243) der Verzahnung (130) ragt,
**dadurch gekennzeichnet,**
**dass** die Zahnkopfbereiche (240) am Axialabschnitt (128) des Gehäuses (5) jeweils bis auf einen Radialspalt (244) an die jeweils zugeordneten Zahnfußbereiche (242) des jeweiligen radial äußeren Kupplungselementes (132) herangeführt sind, wobei diese Radialspalte (244) jeweils als Strömungspassagen (246) für fluidförmiges Medium dienen.

34. Fluidbefüllte Kopplungsanordnung nach einem der Ansprüche 1 bis 33,
**dadurch gekennzeichnet,**
**dass** die Zahnkopfbereiche (241) des jeweiligen radial äußeren Kupplungselementes (132) zumindest im Wesentlichen bis unmittelbar an die jeweils zugeordneten Zahnfußbereiche (243) des Axialabschnittes (128) des Gehäuses (5) angenähert sind, und hierdurch Heranführungen (248) bilden, die jeweils als Strömungshindernisse (250) für fluidförmiges Medium dienen.

35. Fluidbefüllte Kopplungsanordnung nach Anspruch 33 und/oder 34, mit einem den radial äußeren Kupplungselementen (132) als Anschlag zugeordneten End-Kupplungselement (134), das mittels eines in eine umlaufende Nut (252) des Axialabschnittes (128) des Gehäuses (5) eingelassenen Stützringes (136) seinerseits gegenüber der Verzahnung (130) axial positioniert ist,
**dadurch gekennzeichnet,**
**dass** der Stützring (136) aufgrund seines Eingriffes in die umlaufende Nut (252) zumindest im Erstreckungsbereich der Strömungspassagen (246) der Verzahnung (130) als Fluiddichtung (254) wirksam ist.

## Claims

1. Fluid-filled coupling arrangement (3) with a clutch device (66) which has a housing (5), having a piston (62) which is at least substantially sealed off and arranged in axially displaceable fashion in the housing (5), and having a clutch (120) which is provided in a cooling chamber (220) and which has a friction region, wherein, by way of the clutch device (66), in a manner dependent on the position of the piston (62) relative to the clutch (120), an operative connection between a drive input (11) and a drive output (18) can be at least partially established or eliminated, wherein, by way of the piston (62), a drive-input-side pressure chamber (105) provided between a drive-input side of the piston (62) and an adjacent housing wall (20) is at least substantially separated from a drive-output-side pressure chamber (112) provided on a drive-output side of the piston (62), and at least one of said pressure chambers (105, 112) and the cooling chamber (220) is assigned at least one supply line (75, 76, 78) which is connected to at least one supply source (80), wherein the drive-output-side pressure chamber (112) is delimited at least substantially at one side by the drive-output side (114) of the piston (62) and at the other side by a partition (110) which is assigned to the piston (62), which partition itself acts between the drive-output-side pressure chamber (112) and the cooling chamber (220), and which partition has a rotational securing means (162) at least substantially in the region of its radially outer end (117),
**characterized**
**in that**, regardless of the respective axial position of the piston (62) and thus regardless of the operating state of the clutch device (66), the partition (110) is always held in contact with the respectively adjacent component (122) of the clutch (120), and in that the partition (110) produces, by way of the rotational securing means (162), a rotationally conjoint connection in relation to the housing (5) and thus in relation to the drive input (11).

2. Fluid-filled coupling arrangement according to Claim 1,
**characterized**
**in that** the holding of the partition (110) in contact with the respectively adjacent component (122) of the clutch (120) is defined under the influence of a pressure gradient between the pressure chamber (112) and the cooling chamber (220).

3. Fluid-filled coupling arrangement according to either of Claims 1 and 2,
**characterized**
**in that** the partition (110) is arranged so as to be axially displaceable relative to the piston (62).

4. Fluid-filled coupling arrangement according to one of Claims 1 to 3,
**characterized**
**in that** the partition (110) and/or the piston (62) are, on their sides facing towards the respective other component (62, 110), formed with spacers (124) for realizing flow ducts (125) between partition (110) and piston (62).

5. Fluid-filled coupling arrangement according to one of Claims 1 to 4,
**characterized**
**in that** the piston (62) and/or the partition (110) has an axial profiling (126) for realizing flow ducts (127) between partition (110) and piston (62).

6. Fluid-filled coupling arrangement according to one of Claims 1 to 5,
**characterized**
**in that**, between the drive-output-side pressure chamber (112) and the cooling chamber (220), there is provided a flow passage (150) which, as a result of being positioned in the region of arrangement of the clutch (120), effects a forced supply of flow to the friction region (140) thereof.

7. Fluid-filled coupling arrangement according to one of Claims 1 to 6,
**characterized**
**in that** the partition (110) has, at least substantially in its radially outer region, the flow passage (150) between the drive-output-side pressure chamber (112) and the cooling chamber (220).

8. Fluid-filled coupling arrangement according to one of Claims 1 to 7,
**characterized**
**in that** the rotational securing means (162) acts as a flow passage (150).

9. Fluid-filled coupling arrangement according to Claim 7 or 8 having a toothing on the housing cover for the rotational securing of drive-input-side clutch elements of the clutch,
**characterized**
**in that** the rotational securing means (162) is formed by a toothing (142) of the partition (110), which toothing engages into the toothing (130) of the housing cover (20).

10. Fluid-filled coupling arrangement according to Claim 7 or 8,
**characterized**
**in that** the rotational securing means (162) is formed by at least one projection (166) which is provided on the partition (110) and which engages in positively locking fashion into a cutout (164) of the adjacent clutch element (122).

11. Fluid-filled coupling arrangement according to Claim 7 or 8,
**characterized**
**in that** the partition (110) has an outer radial extension (168) which, while acting as a substitute clutch element (170) for the clutch (120) that can be acted on by the piston, has, on the radially outer end (117) of the radial extension (168), a toothing (142) which is designed for engaging into the toothing (130) of the housing cover (20).

12. Fluid-filled coupling arrangement according to one of Claims 1 to 11,
**characterized**
**in that** a piston rotational securing means (192) for the piston (62) is formed by an axial sliding guide (180) provided on the piston (62) and/or on the partition (110), which piston rotational securing means engages into an associated receptacle (186) of the respectively adjacent component, that is to say piston (62) or partition (110), and permits a relative movement of piston (62) and partition (110) in an axial direction.

13. Fluid-filled coupling arrangement according to Claim 12,
**characterized**
**in that** the axial sliding guide (180) is formed by at least one peg (182) which engages in axially displaceable fashion into in each case one opening (188) which serves as receptacle (186).

14. Fluid-filled coupling arrangement according to Claim 12,
**characterized**
**in that** the axial sliding guide (180) is formed by at least one cassette (184) which engages in axially displaceable fashion into in each case one cassette holder which serves as receptacle (186).

15. Fluid-filled coupling arrangement according to Claim 12, 13 or 14,
**characterized**
**in that** the axial sliding guide (180) in conjunction with the receptacle (186) is provided in each case in a radially central section (194) of the partition (110) and of the piston (62).

16. Fluid-filled coupling arrangement according to one of Claims 1 to 15, having a drive-input-side pressure chamber to which there is connected a first supply line which is assigned directly to said drive-input-side pressure chamber,
**characterized**
**in that** the drive-output-side pressure chamber (112) is connected to the supply source (80) either by way of a second supply line (76) assigned directly to said drive-output-side pressure chamber or by way of a first connection (208) to the first supply line (75; 202).

17. Fluid-filled coupling arrangement according to Claim 16,
**characterized**
**in that** the drive-output-side pressure chamber (112) is connected to the drive-input-side pressure chamber (105), and thus to the first supply line (75; 202), by way of the first connection (208) and by way of a second connection (214) which is open in a manner dependent on the switching state of a valve (206).

18. Fluid-filled coupling arrangement according to Claim 17,
**characterized**
**in that** the valve (206) closes the second connection (214) when a positive pressure prevails in the drive-input-side pressure chamber (105) in relation to the drive-output-side pressure chamber (112), whereas said valve keeps said second connection open in the case of reversed pressure conditions.

19. Fluid-filled coupling arrangement according to one of Claims 1 to 18, having a torsional vibration damper which has a torsion damper hub,
**characterized**
**in that** the piston (62) is, like the partition (110), received on the torsion damper hub (52).

20. Fluid-filled coupling arrangement according to one of Claims 1 to 18, having a drive-input-side housing hub received on the housing cover,
**characterized**
**in that** the piston (62) is received on the drive-input-side housing hub (15), and the partition (110) is received on the torsion damper hub (52), wherein at least one centring and/or axially positioning bearing arrangement (200) is provided between drive-input-side housing hub (15) and torsion damper hub (52).

21. Fluid-filled coupling arrangement according to one of Claims 1 to 20,
**characterized**
**in that** the partition (110) is, at least on its radially inner end (115) in relation to the drive-input-side housing hub (15) or the torsion damper hub (52), equipped with a seal (160).

22. Fluid-filled coupling arrangement according to Claim 21,
**characterized**
**in that** the seal (160) is in the form of a gap seal (116).

23. Fluid-filled coupling arrangement according to Claim 21,
**characterized**
**in that** the seal (160) is in the form of a contact seal (158).

24. Fluid-filled coupling arrangement according to one of Claims 1 to 23,
**characterized**
**in that** the partition (110) has radial profilings (196) for delimiting, on both sides, flow ducts (198) which run in a circumferential direction in each case between two radial profilings (196).

25. Fluid-filled coupling arrangement according to one of Claims 1 to 23,
**characterized**
**in that** the partition (110) has at least one integrated zone (228).

26. Fluid-filled coupling arrangement according to Claim 25,
**characterized**
**in that** the at least one integrated zone (228) of the partition (110) is formed in at least one predetermined radial region relative to the axis of rotation (4) of the housing (5).

27. Fluid-filled coupling arrangement according to Claim 25 or 26,
**characterized**
**in that** the integrated zone (228) of the partition (110) is provided at least substantially in the radial region of the pressure region (129) of the piston (62).

28. Fluid-filled coupling arrangement according to Claim 25, 26 or 27,
**characterized**
**in that** the integrated zone (228) of the partition (110) may, in the case of the pressure region (129) of the piston (62) being equipped with a profiling (126) for forming flow ducts (127), be of planar-surfaced form.

29. Fluid-filled coupling arrangement according to Claim 25, 26 or 27,
**characterized**
**in that** the integrated zone (228) of the partition (110) is, in the circumferential direction, formed with an alternatingly varying axial spacing to the pressure region (129) of the piston (62), such that an undulating profiling (232) is formed in the circumferential direction.

30. Fluid-filled coupling arrangement according to Claim 25, 26 or 27,
**characterized**
**in that** the integrated zone (228) of the partition (110) is formed with radially outwardly extending tongues (234) between which in each case circumferential interstices (236) are provided in the partition (62), such that a profiling (238) with interstices is formed in the circumferential direction.

31. Fluid-filled coupling arrangement according to Claim 29 or 30,
**characterized**
**in that**, in the case of the partition (110) being formed with a profiling (232, 238), the integrated zone (228) serves for forming flow ducts (127) such that the pressure region (129) of the piston (62) can be of planar-surfaced form.

32. Fluid-filled coupling arrangement according to one of Claims 25 to 31,
**characterized**
**in that** the partition (110) may, in the case of an embodiment with an integrated zone (228), be provided either in a planar-surfaced form or in the form of a profiling (232, 238) as axial spring (230).

33. Fluid-filled coupling arrangement according to one of Claims 1 to 32, having a toothing (130) which is provided on the axial section (128) of the housing (5) and into which in each case one radially outer clutch element (132) engages at least substantially in each case without play in a circumferential direction, wherein the toothing (130) projects in each case with its tooth tip regions (240) into in each case one tooth root region (242) of in each case one radially outer clutch element (132) which, in turn, projects by way of its tooth tip regions (241) into in each case one tooth root region (243) of the toothing (130),
**characterized**
**in that** the tooth tip regions (240) on the axial section (128) of the housing (5) approach the respectively associated tooth root regions (242) of the respective radially outer clutch element (132) so as to leave in each case a radial gap (244), wherein said radial gaps (244) serve in each case as flow passages (246) for fluid medium.

34. Fluid-filled coupling arrangement according to one of Claims 1 to 33,
**characterized**
**in that** the tooth tip regions (241) of the respective radially outer clutch element (132) extend at least substantially into the direct vicinity of the respectively associated tooth root regions (243) of the axial section (128) of the housing (5), and in this way form approaching portions (248) which serve in each case as flow obstructions (250) for fluid medium.

35. Fluid-filled coupling arrangement according to Claim 33 and/or 34, having an end clutch element (134) which is assigned, as a stop, to the radially outer clutch elements (132) and which is itself positioned axially relative to the toothing (130) by way of a support ring (136) which is recessed into an encircling groove (252) of the axial section (128) of the housing (5),
**characterized**
**in that** the support ring (136), owing to its engagement into the encircling groove (252), acts as a fluid seal (254) at least in the region of extent of the flow passages (246) of the toothing (130).

## Revendications

1. Accouplement rempli de liquide (3) comportant un dispositif d'accouplement (66) disposant d'un logement (5), présentant un piston (62) disposé de manière déplaçable axialement et au moins substantiellement étanchéifiée dans le logement (5) et un accouplement (120) présentant une zone de friction, prévu dans un espace de refroidissement (220), dans lequel une liaison opérationnelle entre un entraînement (11) et une sortie (18) peut être établie ou annulée au moins partiellement par le dispositif d'accouplement (66) en fonction de la position du piston (62) par rapport à l'accouplement (120), dans lequel un espace de pression (105) du côté d'entraînement prévu entre un côté d'entraînement du piston (62) et une paroi de logement voisine (20) est séparé au moins substantiellement par le piston (62) d'un espace de pression (112) du côté de sortie prévu sur un côté de sortie du piston (62) et au moins un de ces espaces de pression (105,112) ainsi que l'espace de refroidissement (220) est coordonné à au moins une conduite d'alimentation (75, 76, 78), qui est raccordée à au moins une source d'alimentation (80), dans lequel l'espace de pression du côté de sortie (112) est délimité au moins substantiellement d'un côté par le côté de sortie (114) du piston (62) et d'un autre côté par une paroi de séparation (110) associée au piston (62), qui fonctionne de son côté entre l'espace de pression du côté de sortie (112) et l'espace de refroidissement (220), et qui dispose au moins substantiellement dans la zone de son extrémité extérieure radiale (117) d'une sécurité anti-rotation (162),
**caractérisé en ce que**
la paroi de séparation (110) est maintenue indépendamment de la position axiale respective du piston (62) et donc de l'état de fonctionnement du dispositif d'accouplement (66) constamment en appui contre le composant respectivement voisin (122) de l'accouplement (120) et **en ce que** la paroi de séparation (110) établit une liaison solidaire en rotation via la sécurité anti-rotation (162) par rapport au logement (5) et donc à l'entraînement (11).

2. Accouplement rempli de liquide selon la revendication 1, **caractérisé en ce que** le maintien en place de la paroi de séparation (110) sur le composant respectivement voisin (122) de l'accouplement (120) est déterminé sous l'influence d'une chute de pression entre l'espace de pression (112) et l'espace de refroidissement (220).

3. Accouplement rempli de liquide selon une des revendications 1 ou 2, **caractérisé en ce que** la paroi de séparation (110) est disposée de manière déplaçable axialement par rapport au piston (62).

4. Accouplement rempli de liquide selon une des revendications 1 à 3, **caractérisé en ce que** la paroi de séparation (110) et/ou le piston (62) sont conçus sur les côtés tournés vers l'autre composant respectif (62,110) avec des écarteurs (124) pour créer des canaux d'écoulement (125) entre la paroi de séparation (110) et le piston (62).

5. Accouplement rempli de liquide selon une des revendications 1 à 4, **caractérisé en ce que** le piston (62) et/ou la paroi de séparation (110) disposent d'un profilage axial (126) pour créer des canaux d'écoulement (127) entre la paroi de séparation (110) et le piston (62).

6. Accouplement rempli de liquide selon une des revendications 1 à 5, **caractérisé en ce qu'**entre l'espace de pression du côté de sortie (112) et l'espace de refroidissement (220) un passage d'écoulement (150) est prévu, qui provoque par le positionnement dans la zone de disposition de l'accouplement (120) un écoulement contraint dans la zone de friction (140) de ce dernier.

7. Accouplement rempli de liquide selon une des revendications 1 à 6, **caractérisé en ce que** la paroi de séparation (110) dispose au moins substantiellement dans sa zone radialement extérieure d'un passage d'écoulement (150) entre l'espace de pression du côté de sortie (112) et l'espace de refroidissement (220).

8. Accouplement rempli de liquide selon une des revendications 1 à 7, **caractérisé en ce que** la sécurité anti-rotation (162) fonctionne comme passage d'écoulement (150).

9. Accouplement rempli de liquide selon la revendication 7 ou 8 comportant une denture sur le couvercle de logement pour la sécurité anti-rotation des éléments d'accouplement du côté d'entraînement de l'accouplement, **caractérisé en ce que** la sécurité anti-rotation (162) est formée par une denture (142) de la paroi de séparation (110) venant en prise dans la denture (130) du couvercle de logement (20).

10. Accouplement rempli de liquide selon la revendication 7 ou 8, **caractérisé en ce que** la sécurité anti-rotation (162) est formée par au moins une protubérance (166), prévue sur la paroi de séparation (110), venant en prise par complémentarité de forme dans un évidement (164) de l'élément d'accouplement voisin (122).

11. Accouplement rempli de liquide selon la revendication 7 ou 8, **caractérisé en ce que** la paroi de séparation (110) dispose d'un épaulement radial extérieur (168), qui, lorsqu'il fonctionne comme élément d'accouplement de remplacement (170) pour 1"accouplement (120) sollicité par le piston, présente sur l'extrémité radialement extérieure (117) de l'épaulement radial (168) une denture (142), qui est déterminée pour venir en prise dans la denture (130) du couvercle de logement (20).

12. Accouplement rempli de liquide selon une des revendications 1 à 11, **caractérisé en ce qu'**une sécurité anti-rotation de piston (192) pour le piston (62) est formée par une glissière de guidage axial (180) prévue sur le piston (62) et/ou sur la paroi de séparation (110), qui vient en prise dans un réceptacle coordonné (186) du composant voisin respectif, c'est à dire le piston (62) ou la paroi de séparation (110), et permet un mouvement relatif du piston (62) et de la paroi de séparation (110) dans la direction axiale.

13. Accouplement rempli de liquide selon la revendication 12, **caractérisé en ce que** la glissière de guidage axial (180) est formée par au moins un tourillon (182), qui vient en prise de manière déplaçable axialement dans respectivement une ouverture (188) servant de réceptacle (186).

14. Accouplement rempli de liquide selon la revendication 12, **caractérisé en ce que** la glissière de guidage axial (180) est formée par au moins une cassette (184), qui vient en prise de manière déplaçable axialement dans respectivement un support de cassette servant de réceptacle (186).

15. Accouplement rempli de liquide selon la revendication 12, 13 ou 14, **caractérisé en ce que** la glissière de guidage axial (180) est prévue en liaison avec le réceptacle (186) respectivement dans une portion médiane radiale (194) de la paroi de séparation (110) ainsi que du piston (62).

16. Accouplement rempli de liquide selon une des revendications 1 à 15 comportant un espace de pression du côté d'entraînement, auquel est raccordé une première conduite d'alimentation directement associée à ce dernier, **caractérisé en ce que** l'espace de pression du côté de sortie (112) est raccordé à la source d'alimentation (80) soit par une deuxième conduite d'alimentation (76) directement associée à ce dernier, soit par une première liaison (208) à la première conduite d'alimentation (75 ; 202).

17. Accouplement rempli de liquide selon la revendication 16, **caractérisé en ce que** l'espace de pression du côté de sortie (112) est raccordé par la première liaison (208) ainsi que par une deuxième liaison (214) ouverte en fonction de l'état de commutation d'une soupape (206) avec l'espace de pression (105) du côté d'entraînement et donc avec la première conduite d'alimentation (75 ; 202).

18. Accouplement rempli de liquide selon la revendication 17, **caractérisé en ce que** la soupape (206) en présence d'une surtension dans l'espace de pression (105) du côté d'entraînement ferme la deuxième liaison (214) par rapport à l'espace de pression du côté de sortie (112), en cas de rapport de pression inverse la maintient au contraire ouverte.

19. Accouplement rempli de liquide selon une des revendications 1 à 18 comportant un amortisseur de vibrations de torsion présentant un moyeu amortisseur de torsion, **caractérisé en ce que** le piston (62) est réceptionné comme la paroi de séparation (110) sur le moyeu amortisseur de torsion (52).

20. Accouplement rempli de liquide selon une des revendications 1 à 18 comportant un moyeu de logement du côté d'entraînement réceptionné sur le couvercle de logement, **caractérisé en ce que** le piston (62) est réceptionné sur le moyeu de logement (15) du côté d'entraînement et la paroi de séparation (110) sur le moyeu amortisseur de torsion (52), dans lequel entre le moyeu de logement (15) du côté d'entraînement et le moyeu amortisseur de torsion (52) au moins un palier (200) centrant et/ou positionnant axialement est prévu.

21. Accouplement rempli de liquide selon une des revendications 1 à 20, **caractérisé en ce que** la paroi de séparation (110) est pourvue au moins sur son extrémité radialement intérieure (115) par rapport au moyeu de logement (15) du côté d'entraînement ou du moyeu amortisseur de torsion (52) d'une isolation étanche (160).

22. Accouplement rempli de liquide selon la revendication 21, **caractérisé en ce que** l'isolation étanche (160) est conçue comme un joint d'étanchéité à fente (116).

23. Accouplement rempli de liquide selon la revendication 21, **caractérisé en ce que** l'isolation étanche (160) est conçue comme un joint d'étanchéité à contact (158).

24. Accouplement rempli de liquide selon une des revendications 1 à 23, **caractérisé en ce que** la paroi de séparation (110) dispose de profilages radiaux (196) pour délimiter des deux côtés des canaux d'écoulement (198) s'étendant dans la direction circonférentielle respectivement entre deux profilages radiaux (196).

25. Accouplement rempli de liquide selon une des revendications 1 à 23, **caractérisé en ce que** la paroi de séparation (110) dispose d'au moins une zone intégrée (228).

26. Accouplement rempli de liquide selon la revendication 25, **caractérisé en ce que** l'au moins une zone intégrée (228) de la paroi de séparation (110) est réalisée dans au moins une zone radiale prédéterminée relativement à l'axe de rotation (4) du logement (5).

27. Accouplement rempli de liquide selon la revendication 25 ou 26, **caractérisé en ce que** la zone intégrée (228) de la paroi de séparation (110) est prévue au moins substantiellement dans la zone radiale de la zone de pression (129) du piston (62).

28. Accouplement rempli de liquide selon la revendication 25, 26 ou 27, **caractérisé en ce que** la zone intégrée (228) de la paroi de séparation (110) peut être conçue en configuration plane sur la zone de pression (129) du piston (62) pourvue d'un profilage (126) pour former des canaux d'écoulement (127).

29. Accouplement rempli de liquide selon la revendication 25, 26 ou 27, **caractérisé en ce que** la zone intégrée (228) de la paroi de séparation (110) est conçue dans la direction circonférentielle avec un espacement axial variable alternant par rapport à la zone de pression (129) du piston (62), de sorte que dans la direction circonférentielle un profilage ondulé (232) soit produit.

30. Accouplement rempli de liquide selon la revendication 25, 26 ou 27, **caractérisé en ce que** la zone intégrée (228) de la paroi de séparation (110) est conçue avec des languettes (234) s'étendant radialement vers l'extérieur, entre lesquelles des interruptions de circonférence (236) respectives sont prévues dans la paroi de séparation (62), de sorte que dans la direction circonférentielle un profilage sujet à interruption (238) soit produit.

31. Accouplement rempli de liquide selon la revendication 29 ou 30, **caractérisé en ce que** la zone intégrée (228) sert à former des canaux d'écoulement (127) lors de la réalisation de la paroi de séparation (110) avec un profilage (232, 238), de sorte que la zone de pression (129) du piston (62) puisse être conçue en configuration plane.

32. Accouplement rempli de liquide selon une des revendications 25 à 31, **caractérisé en ce que** la paroi de séparation (110) lors de la réalisation avec une zone intégrée (228) peut être prévue comme ressort axial (230) tant dans la configuration plane que sous forme d'un profilage (232, 238).

33. Accouplement rempli de liquide selon une des revendications 1 à 32 comportant une denture (130) prévue sur la portion axiale (128) du logement (5), dans laquelle respectivement un élément d'accouplement (132) radialement extérieur vient en prise au moins substantiellement à chaque fois sans jeu dans la direction circonférentielle, dans lequel la denture (130) dépasse à chaque fois par ses zones de tête de dent (240) dans une zone de pied de dent respective (242) d'un élément d'accouplement (132) radialement extérieur respectif, qui dépasse de son côté par ses zones de tête de dent (241) dans une zone de pied de dent respective (243) de la denture (130), **caractérisé en ce que** les zones de tête de dent (240) sur la portion axiale (128) du logement (5) sont respectivement rapprochées jusqu'à un interstice radial (244) sur les zones de pied de dent associées respectives (242) de l'élément d'accouplement radialement extérieur (132) respectif, dans lequel ces interstices radiaux (244) servent respectivement comme passages d'écoulement (246) du milieu fluide.

34. Accouplement rempli de liquide selon une des revendications 1 à 33, **caractérisé en ce que** les zones de tête de dent (241) de l'élément d'accouplement radialement extérieur (132) respectif sont rapprochées au moins substantiellement jusque directement aux zones de pied de dent (243) associées respectivement de la portion axiale (128) du logement (5), et forment ainsi des rapprochements (248), qui servent respectivement d'obstacles à l'écoulement (250) du milieu fluide.

35. Accouplement rempli de liquide selon la revendication 33 et/ou 34, comportant un élément d'accouplement d'extrémité (134) associé comme butée aux éléments d'accouplement radialement extérieurs (132), qui est positionné de son côté axialement par rapport à la denture (130) au moyen d'une bague d'appui (136) placée dans une rainure circonférentielle (252) de la portion axiale (128) du logement (5), **caractérisé en ce que** la bague d'appui (136) en raison de sa mise en prise dans la rainure circonférentielle (252) fonctionne au moins dans la zone d'extension des passages d'écoulement (246) de la denture (130) comme joint d'étanchéité au fluide (254).
